# EUROPEAN PATENT SPECIFICATION

(11) **EP 4 188 995 B1**
(45) Date of publication and mention of the grant of the patent: **08.01.2025**
(21) Application number: 21752141.8
(22) Date of filing: 27.07.2021
(51) Int. Cl.: C08J 7/048, B32B 27/08, B32B 27/16, B32B 27/18, B32B 27/30, B32B 27/32, A01G 9/14

(54) **FILMS FOR AGRICULTURAL STRUCTURES**
FOLIEN FÜR LANDWIRTSCHAFTLICHE STRUKTUREN
FILMS POUR STRUCTURES AGRICOLES

(30) Priority: 27.07.2020 EP 20386038
(43) Date of publication of application: 07.06.2023
(73) Proprietor: Plastika Kritis S.A., 711 10 Crete (GR)
(72) Inventor: FRYSALI, Melani A., 711 10 Iraklion (GR); ANDROULAKI, Krystalenia, 711 10 Iraklion (GR)
(74) Representative: Gill Jennings & Every LLP
(86) International application number: PCT/GR2021/000050
(87) International publication number: WO 2022/023782

(56) References cited:
- WO-A1-2008/026229
- US-A1- 2010 272 936
- US-A1- 2013 032 068
- DATABASE WPI Week 199824, 1998 Derwent World Patents Index; AN 1998-266012, XP002801245
- DALE S. GIBBS ET AL: "Vinylidene Chloride Monomer and Polymers A Technical Report on VDC and PVDC", KIRK-OTHMER: ENCYLCOPEDIA OF CHEMICAL TECHNOLOGY. 4TH ED. VOL. 24, 1997, 1 January 1997 (1997-01-01) - 2016, pages 882 - 923, XP055264141, Retrieved from the Internet <URL:http://msdssearch.dow.com/PublishedLiteratureDOWCOM/dh_005d/0901b8038005d707.pdf?filepath=plastics_ap/pdfs/noreg/190-00347.pdf&fromPage=GetDoc> [retrieved on 20160411]

## Description

### FIELD OF THE INVENTION

This invention relates to polymeric films for covering agricultural structures and methods of making such films. The invention also relates to the use of a coating on at least one outer surface of a polymeric film as a barrier to gases and water vapour and to reduce the susceptibility of the film to photodegradation in the presence of agrochemicals.

### BACKGROUND

Agricultural structures are often covered with flexible films comprising polymeric materials for a variety of purposes. For example, greenhouses may be covered with polymeric films that are tailored to provide a favorable environment for the cultivation of crops and plants. The polymeric films provide protection for the crops grown underneath from adverse weather conditions and create a greenhouse effect by selectively filtering solar radiation.

The polymeric materials of the films, such as polyethylene, ethylene vinyl acetate (EVA) and ethylene butyl acrylate (EBA) copolymers, absorb ultraviolet radiation resulting in photodegradation of the film, thereby reducing the useful lifetime of the film. For this reason, ultraviolet (UV) stabilisers are usually added to the polymeric film material. UV stabilisers function by absorbing UV radiation thereby preventing its absorption by the polymers of the film (UV absorbers) or by interrupting the chemical reactions that lead to photodegradation (free radical scavengers).

Ultraviolet absorbers have two disadvantages that do not allow them to protect the polymer adequately: a) they are usually small molecules which gradually migrate to the surface of the film and are lost to the surroundings; (b) they cannot protect adequately the surface of the film as according to the laws of physics (Lamberts Beer law) they require a certain depth to act as an ultraviolet filter. For this reason, over the last 20 years, the so-called HALS (Hindered Amine Light Stabilizers) have prevailed as the main stabilizers of greenhouse films. HALS are sterically hindered amine compounds which act as free radical scavengers, reacting with the free radicals formed in the polymer under the influence of oxygen, ultraviolet radiation and heat. This stops the chemical reactions that would otherwise lead to chain-scission or cross-linking of the polymer molecules and to a degradation of the physical and optical properties of the film.

HALS have proven to be very effective stabilizers for many applications. However, in the case of greenhouse films there is a serious constraint leading to a reduction of their effectiveness: in the interior of greenhouses, there is wide use of agrochemicals for soil disinfection and plant protection. These agrochemicals decompose under the influence of heat and ultraviolet radiation and create active chemical compounds that enter the film, either in gaseous form or dissolved in water vapor, react with HALS and deactivate them. In particular, sulfur as well as sulfur and chlorine containing compounds can lead to a very significant reduction in the useful lifetime of greenhouse films containing HALS, e.g. from 3-5 years in the Mediterranean to 1-2 years.

In recent years, greenhouse film manufacturers and professional associations (e.g. CEPLA, Spain) have established limits on the sulfur and chlorine content in films that degrade prematurely in order for the manufacturer's lifetime guarantee to be valid. Nevertheless, because the use of pesticides in greenhouses to prevent various crop diseases is unavoidable, and even increasing, the main issue today for improving the quality of polymeric films is to avoid premature ageing due to pesticides.

Various solutions have been proposed to this problem. One proposal is to use a nickel complex as a stabilizer, which is completely resistant to sulfur. However, it is sensitive to chlorine and imparts a yellow color to the film, which is undesirable because it reduces light transmission. Another solution that has been proposed is the use of co-stabilizers that react with the active residues of pesticides and deactivate them, but this has proven insufficient. A further solution is the use of HALS resistant to pesticides such as the NOR HALS. Unfortunately, these specific HALS, although they are more resilient than common HALS, have not solved the problem adequately and premature aging of greenhouse films due to the effect of agrochemicals on UV stabilizers is still observed.

WO2009/060480 and EP1857272 disclose multilayer films comprising a coextruded layer of polyamide. The layer of polyamide may act as a barrier layer to prevent the entry of agrochemicals into the film in gaseous form. Unfortunately, this coextruded layer of polyamide has low elasticity and poor tear propagation strength, which significantly reduces the mechanical strength of the film. The layer of polyamide is also very sensitive to photodegradation, which reduces the lifetime of the film. The polyamide layer also absorbs moisture (up to 9% of its mass) that often contains chemical residues, which are then diffused throughout the mass of the film destroying the stabilizers and/or the polymer itself. When the layer of polyamide absorbs moisture, its permeability to gases also increases to a level where it can no longer prevent the permeation of agrochemicals into the film.

In the case of silage films, it is beneficial for the film to have a low permeability to oxygen to improve the process of anaerobic fermentation and therefore achieve better silage qualify, with fewer losses due to mold.

Multilayer silage films have been proposed, such as those described in US6610377, in which the permeability of oxygen is reduced by using a coextruded layer of polyamide (PA) or ethylene vinyl alcohol (EVOH) in the middle of the film. The disadvantage of these films is that compared to polymeric films without coextruded layers of EVOH and/or PA, they have inferior mechanical properties as discussed above. Particularly affected is the impact resistance (dart test), which is important for this application. In addition, the use of a coextruded layer of EVOH or PA makes it more difficult for these films to be recycled. Moreover, the production of such films requires the use of production machines capable of forming films of at least five layers and the production process is quite demanding, with high scrap level.

US 2013/0032068 A1 relates to agricultural fumigation using a multilayer film including a PVDC vapor barrier.

US 2010/0272936 A1 relates to a multilayer structure for the manufacture of packaging and packaging thereof.

JP H10 86295 A relates to a vinyl chloride resin film for agriculture.

WO 2008/026229 A1 relates to a polymer film for use in agriculture.

In view of the above, there is an unmet need for improved films for covering agricultural structures having a reduced susceptibility to photodegradation in the presence of agrochemicals and good barrier properties to oxygen, while maintaining excellent mechanical properties and recyclability.

### DISCLOSURE OF THE INVENTION

According to first aspect of the invention, there is provided a film for covering agricultural structures, comprising:
a) a polymeric film having one or more layers, wherein at least one of the layers comprises one or more UV stabilisers; and
b) a coating on at least one outer surface of the polymeric film, the coating comprising at least one layer comprising a polymer, such that the film has an oxygen permeability below 500 ml/m²/bar/day at 23°C and 0% relative humidity, as measured according to EN ISO 15105-2.

The polymer coating on the surface of the polymeric film provides the film with a low permeability to oxygen and therefore acts as an external gas barrier. As a result, the coating also acts as a barrier to agrochemicals or derivatives thereof in gaseous form, thereby preventing the deactivation of the UV stabilisers in the layers of the film. The films of the invention therefore have improved lifetimes in the presence of agrochemicals, as the polymeric materials of the film are less prone to photodegradation.

The low oxygen permeability of the films of the invention is particularly advantageous for silage films as it promotes anaerobic fermentation thereby achieving a better silage quality with fewer losses due to mold.

As used herein, the term "coating" refers to one or more layers on an outer surface of the polymeric film, wherein each layer is formed by depositing a solution. The at least one layer of the coating comprising the polymer is formed by depositing a solution comprising the polymer. Therefore, the coating forms an external surface of the film and is not a layer within the polymeric film. The coating according to the invention is structurally distinct from a layer of a film produced by coextrusion. Since the coating is formed from a solution, the polymer is in the form of dispersed polymer chains that are deposited to form the coating. In contrast, a coextruded layer is a continuous layer of plastic that has been melted together. Therefore, the coating according to the present invention can be distinguished from a coextruded layer of a film by appropriate techniques. For example, the presence of a coextruded layer in a film can be detected using infrared (IR) spectroscopy. Scanning electron microscopy (SEM) can be used to examine the surface of the film and identify the presence of a coating according to the present invention. EDS (Energy-dispersive X-ray spectroscopy) can be used to determine the elemental composition of the coating and therefore identify the materials present in the coating.

It has surprisingly been found that the use of a barrier coating results in improved mechanical properties compared to a film comprising a coextruded barrier layer. Coextruded barrier layers (for example made from EVOH or polyamide) are rigid and their presence reduces the elasticity and impact strength of the film. The barrier coatings of the invention do not suffer from these drawbacks.

In summary, the use of a barrier coating on the surface of the polymeric film provides a film with low oxygen permeability and reduced permeability to agrochemicals, while maintaining excellent mechanical properties. Furthermore, the films of the invention maintain excellent recyclability.

The inventors have also found that the coating may increase the hydrophilicity of the surface of the polymeric film. This provides the film with anti-dripping properties (i.e. the film inhibits the creation of drops on its surface), which is very desirable for greenhouse covers.

According to another aspect of the invention, there is provided the use of a coating on at least one outer surface of a polymeric film to reduce the susceptibility of the film to photodegradation in the presence of agrochemicals, wherein the coating comprises at least one layer comprising a polymer, and wherein the polymeric film comprises one or more layers, at least one layer comprising one or more UV stabilisers.

According to another aspect of the invention, there is provided the use of a coating on at least one outer surface of a polymeric film to reduce the permeability of the polymeric film to gases and/or water vapour, wherein the coating comprises at least one layer comprising a polymer, and wherein the polymeric film comprises one or more layers, at least one layer comprising one or more UV stabilisers.

According to another aspect of the invention, there is provided an agricultural structure, characterised in that at least a portion thereof is covered with the film of the invention.

According to another aspect of the invention, there is provided a method of covering an agricultural structure, comprising covering at least a portion of the agricultural structure with a film according to the invention.

According to another aspect of the invention, there is provided a method of producing a film for covering agricultural structures, comprising: i) providing a polymeric film comprising one or more layers, wherein at least one of the layers comprises one or more UV stabilisers; and ii) depositing a coating on at least one outer surface of the polymeric film, the coating comprising at least one layer comprising a polymer, such that the film has an oxygen permeability below 500 ml/m²/bar/day at 23°C and 0% relative humidity, as measured according to EN ISO 15105-2.

According to another aspect of the invention, there is provided a film according to the invention obtainable by the method of producing a film according to the invention.

### Polymeric film

The film of the invention comprises a polymeric film having one or more layers.

The layers of the film may be made from any suitable polymeric materials known to those skilled in the art. The one or more layers of the polymeric film may each independently comprise one or more polymers independently selected from the group consisting of polyesters, polyolefins, polyamides and polyurethanes. For example the one or more layers of the polymeric film may each independently comprise one or more polymers selected from the group consisting of low density polyethylene (LDPE), low density linear polyethylene (LLDPE), metallocene low density linear polyethylene (MLLDPE), ethylene-vinyl acetate copolymer (EVA), ethylene butyl acrylate copolymer (EBA), high density polyethylene (HDPE), polypropylene (PP), thermoplastic polyurethane (TPU), polyethylene terephthalate (PET), polyvinyl chloride (PVC), polyamide (PA), ethylene-vinyl alcohol copolymer (EVOH), and combinations thereof.

At least one layer of the polymeric film comprises one or more UV stabilisers, to provide the film with protection from UV radiation, i.e. preventing photodegradation of the polymeric materials in the film thereby increasing the useful lifetime of the film. UV stabilisers may be present in more than one layer of the polymeric film or all layers of the polymeric film, to provide the desired level of UV protection.

As used herein, "UV stabilisers" includes both "UV absorbers" which absorb ultraviolet radiation and thereby prevent its absorption by the polymers of the polymeric film, and Hindered Amine Light Stabilizers which interrupt the chemical reactions that lead to photodegradation of the polymers.

Any suitable UV stabilisers may be used in the polymeric film. The one or more UV stabilisers may be independently selected from the group consisting of Hindered Amine Light Stabilizers (HALS), UV-absorber, and nickel organic complexes (Ni-quencher).

In a preferred aspect of the invention, at least one of the layers of the polymeric film comprises a Hindered Amine Light Stabilizer (HALS).

Examples of HALS suitable for use in the invention are: 1,3,5-Triazine-2,4,6-triamine, N2,N2"-1,2-ethanediylbis[N2-[3-[[4,6-bis[butyl(1,2,2,6,6-pentamethyl-4-piperidinyl)amino]-1,3,5-triazin-2-yl]amino]propyl]-N', N"-dibutyl-N',N"-bis(1,2,2,6,6-pentamethyl-4-piperidinyl)-butanedioic acid, 1,4-dimethyl ester, polymer with 4-hydroxy-2,2,6,6-tetramethyl-1-piperidineethanol; Poly(4-hydroxy-2,2,6,6-tetramethyl-1-piperidineethanol-alt-1,4-butanedioic acid); and Poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]).

The one or more UV stabilisers can be present in the layers of the film in any suitable amount, for example from 0.1 wt.% to 20 wt.%, preferably from 0.1 wt.% to 10 wt.%, most preferably from 0.1 wt.% to 5 wt.%, based on the total weight of the layer.

The layers of the film may each independently comprise one or more additional components. For example, the one or more layers of the polymeric film may each independently comprise IR absorbers, anti-fogging agents, anti-dripping agents, anti-dust materials, anti-algae materials, adhesive materials, and/or pigments.

The term "IR absorber" as used herein, refers to a substance that absorbs infrared radiation (IR).

As used herein, "anti-dripping agents" refers to substances that prevent the condensation of droplets of water, while "anti-fogging agents" refers to substances that prevent the formation of fog on the surface of the film.

As used herein, "anti-dust materials" refers to substances that repel dust from the surface of the film.

As used herein, "anti-algae materials" refers to substances that inhibit the growth of algae on the film.

As used herein, "adhesive materials," refers to substances that enhances binding of the coating on the film.

Examples of suitable pigments that can be used in the layers of the polymeric film include TiOz and carbon black. Silage films are typically a different colour on each side, for example black on one side and white on the other. It may be advantageous to have one side being a light colour (such as white) in order to reflect light and avoid overheating.

It is beneficial for greenhouse films to have a high luminous transmittance to provide optimal light conditions inside the greenhouse for the cultivation of crops and plants. For example, the films of the invention may have a luminous transmittance of at least 30%, preferably at least 50%, more preferably at least 75%, most preferably at least 85%.

Further, it may be preferable for greenhouse films to have low haze characteristics, although this depends on geographical location, as higher levels of haze may be desirable in certain areas of the world. Depending on the particular application, the films of the invention may have a haze of from 10% to 90%.

Haze and luminous transmittance can be measured following the ASTM-D1003-92 Standard Test Method for Haze and Luminous Transmittance of Transparent Plastics. This test method covers the evaluation of specific light-transmitting and wide-angle-light-scattering properties of planar sections of materials, such as essentially transparent plastic. A procedure is provided for the measurement of luminous transmittance and haze. Material having a haze value greater than 30% is considered diffusing. In this test method, "haze" is defined as the cloudy or turbid aspect or appearance of an otherwise transparent specimen caused by light scattering from within the specimen or from its surfaces. It is measured as the percent of total transmitted light which, in passing through the specimen, deviates from the incident beam through forward scatter by more than 0.044 rad (2.5°) on average. Luminous transmittance is the ratio of the luminous flux transmitted by a body to the flux incident upon it.

The haze of the film may be measured with a hazemeter. The luminous transmittance can be obtained by placing a clear specimen at a distance from the entrance port of an integrating sphere.

The polymeric film can have any suitable number of layers, such as from 1 to 100 layers, preferably 3 to 11 layers. The film for covering agricultural structures can have any suitable total thickness and total width, such as a total thickness of from 25 µm to 500 µm and a total width of from 1 m to 50 m or from 1 to 60 m.

The polymeric film can be manufactured by any suitable process known to those skilled in the art. Preferably, the polymeric film is obtainable by extrusion or co-extrusion, more preferably blown-film or cast-film extrusion or co-extrusion.

### Coating

The film of the invention is provided with a coating on at least one outer surface or side of the polymeric film. The coating comprises at least one layer comprising a polymer.

The coating acts as an external barrier on the polymeric film, inhibiting the transmission of gases, such as oxygen, and water vapour through the film. The coating provides the film with an oxygen permeability below 500 ml/m²/bar/day, preferably below 200 ml/m²/bar/day, more preferably below 100 ml/m²/bar/day, measured according to EN ISO 15105-2 at 23°C and 0% relative humidity.

The coating is primarily responsible for the low oxygen permeability of the film. Preferably, the polymeric film without the coating has an oxygen permeability above 500 ml/m²/bar/day, more preferably above 1000 ml/m²/bar/day, measured according to EN ISO 15105-2 at 23°C and 0% relative humidity.

The coating acts as a gas barrier and therefore as a barrier to agrochemicals in gaseous form, preventing them from permeating into the layers of the polymeric film and deactivating the UV stabilisers therein. By preventing the deactivation of the UV stabilisers, the polymeric materials of the film are protected from photodegradation, extending the useful lifetime of the film.

As understood by the skilled person, the term "agrochemicals" refers to chemicals used in agriculture, such as pesticides, insecticides, fumigants, and fertilizers. As used herein, "agrochemicals" also includes by-products produced by the decomposition of the agrochemicals (for example, under the influence of heat and UV radiation) such as sulphur, and sulphur and chlorine containing compounds.

When the films of the invention are used to cover silage, the low oxygen permeability promotes anaerobic fermentation of the silage. This results in a better silage quality with fewer losses due to mold.

By utilising an external barrier coating comprising a polymer, the mechanical properties of the film are not compromised, for example compared to films of the prior art comprising coextruded barrier layers. Coextruded barrier layers (for example made of EVOH or polyamide) are rigid which negatively affects the mechanical properties of the film. When a barrier material such as PA or EVOH is incorporated in the mass of the film as a coextruded layer, such as in the films of the prior art, the mechanical properties of the film are compromised because the flexibility of the coextruded barrier material is lower than the other layers of the film (e.g. polyethylene). As such, the films of the invention have improved mechanical properties, in particular impact resistance, which is particularly beneficial for silage films.

The coating may also provide the film with excellent resistance to abrasion. Further, the coating may also increase the hydrophilicity of the surface of the film. This provides the film with anti-dripping properties (i.e. inhibits the formation of drops on the surface of the film). This is very desirable for greenhouse films in particular, because it prevents water-condensation on the inside surface of the film that can negatively affect plant quality and growth, as the water droplets reduce light-transmission by 15-30% and increase the incidence of certain diseases.

The coating may also provide the film with a low permeability to water vapour, which acts as a barrier to agrochemicals dissolved in water vapour. For example, the film may have a water permeability below 100 g/m²/day, preferably below 50 g/m²/day, most preferably below 10 g/m²/day at 38 °C and 90% relative humidity, measured according to standard ASTM E96.

The coating described herein may be provided on one or both outer surfaces of the polymeric film. The coatings on each outer surface of the polymeric film can be the same or different. Therefore, each coating may independently be defined as described herein.

Furthermore, the coating may comprise more than one layer as long as at least one layer comprises the polymer. Each layer of the coating can be the same or different. Alternatively, the coating may only comprise a single layer comprising the polymer.

The coating covers substantially all of each outer surface of the polymeric film that is provided with the coating. By "substantially all" it is meant that at least 90% of the outer surface is covered with the coating, preferably at least 95%, more preferably at least 98%, most preferably at least 99%.

Any suitable polymer may be used in the coating to provide the film with low oxygen permeability. In a preferred aspect of the invention, the polymer in the coating is a vinylidene chloride homopolymer or copolymer or a vinyl alcohol homopolymer or copolymer.

As used herein, vinylidene chloride has the following structure:

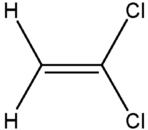

As used herein, the term "homopolymer" refers to a polymer formed essentially from the polymerisation of a single type of monomer or monomer species. Therefore, the term "vinylidene chloride homopolymer" refers to a polymer formed essentially from the polymerisation of only vinylidene chloride monomers. As such, vinylidene chloride homopolymers comprise at least 99 wt. % of the vinylidene chloride monomer, based on the total weight of the homopolymer.

References herein to the amount of the vinylidene chloride monomer in the polymer relate to the units derived from the polymerisation of vinylidene chloride monomers rather than the monomers themselves.

Vinylidene chloride homopolymers have the following repeating unit, where "n" is the number of vinylidene chloride monomer units in the homopolymer:

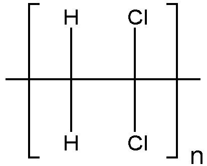

As used herein, the term "copolymer" refers to a polymer formed from the polymerisation of more than one type of monomer. Therefore, the term "vinylidene chloride copolymer" refers to a polymer formed from the polymerisation of vinylidene chloride monomers and one or more other monomers.

The vinylidene chloride copolymer can comprise any suitable amount of the vinylidene chloride monomer, as long as it comprises at least one unit derived from another monomer.

In order to provide optimal barrier properties, it may be beneficial for the vinylidene chloride copolymer to comprise at least 20 wt. % of the vinylidene chloride monomer, preferably at least 40 wt. %, more preferably at least 50 wt. %, more preferably at least 60 wt. %, more preferably at least 70 wt. % most preferably at least 80 wt. %, based on the total weight of the copolymer.

Copolymerising vinylidene chloride with one or more other monomers may be advantageous compared to using the homopolymer of vinylidene chloride. For example, the copolymer may have improved thermal stability. Therefore, in a preferred feature of the invention, the coating comprises a vinylidene chloride copolymer. Preferably, the vinylidene chloride copolymer comprises less than 95 wt.% of the vinylidene chloride monomer, preferably less than 90 wt.%, based on the total weight of the copolymer.

The vinylidene chloride copolymer may comprise from 20 wt.% to 95 wt.% of the vinylidene chloride monomer, preferably from 40 wt.% to 95 wt.%, more preferably from 50 wt.% to 95 wt.%, more preferably from 60 wt.% to 95 wt.%, more preferably from 70 wt.% to 95 wt.%, most preferably from 80 wt.% to 95 wt.%, based on the total weight of the copolymer.

Alternatively, the vinylidene chloride copolymer may comprise from 20 wt.% to 90 wt.% of the vinylidene chloride monomer, preferably from 40 wt.% to 90 wt.%, more preferably from 50 wt.% to 90 wt.%, more preferably from 60 wt.% to 90 wt.%, more preferably from 70 wt.% to 90 wt.%, most preferably from 80 wt.% to 90 wt.%, based on the total weight of the copolymer.

In one preferred aspect of the invention, the vinylidene chloride copolymer comprises at least 50 wt.% of the vinylidene chloride monomer, based on the total weight of the copolymer, preferably from 50 wt.% to 95 wt.%, more preferably from 50 wt.% to 90 wt.%.

As used herein, vinyl alcohol has the following structure:

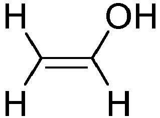

As used herein, the term "vinyl alcohol homopolymer" refers to a polymer formed essentially from the polymerisation of vinyl alcohol monomers. As such, vinyl alcohol homopolymers comprise at least 99 wt. % of the vinyl alcohol monomer, based on the total weight of the homopolymer.

References herein to the amount of the vinyl alcohol monomer in the polymer relate to the units derived from the polymerisation of vinyl alcohol monomers rather than the monomers themselves. As will be appreciated by the skilled person, the polymer may not actually be produced by polymerising vinyl alcohol monomers. Typically, polyvinyl alcohol is produced by polymerising vinyl acetate monomers to form polyvinyl acetate, which is then hydrolysed. Alternatively, acetaldehyde (tautomer of vinyl alcohol) monomers could be used.

Vinyl alcohol homopolymers have the following repeating unit, where "n" is the number of vinyl alcohol monomer units in the homopolymer:

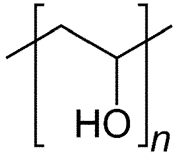

The term "vinyl alcohol copolymer" refers to a polymer formed from the polymerisation of vinyl alcohol monomers and one or more other monomers.

The vinyl alcohol copolymer can comprise any suitable amount of the vinyl alcohol monomer, as long as it comprises at least one unit derived from another monomer.

When hydrolysing polyvinyl acetate to produce polyvinyl alcohol, it may only be partially hydrolysed. Therefore, the vinyl alcohol copolymer may comprise vinyl acetate monomers. Vinyl acetate has the following structure:

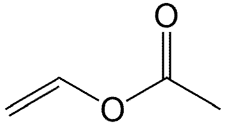

In other words, the vinyl alcohol copolymer may be a copolymer of vinyl alcohol and one or more additional monomers, optionally wherein the one or more additional monomers comprises vinyl acetate.

In order to provide optimal barrier properties, it may be beneficial for the total amount of vinyl alcohol and vinyl acetate monomers in the vinyl alcohol copolymer to be at least 20 wt. %, preferably at least 40 wt. %, more preferably at least 50 wt. %, more preferably at least 60 wt. %, more preferably at least 70 wt. % most preferably at least 80 wt. %, based on the total weight of the copolymer.

Further, it is preferred that the number of vinyl alcohol monomers in the copolymer is at least 80% of the total number of vinyl alcohol and vinyl acetate monomers, preferably at least 95%, most preferably at least 97%. This optimises the barrier properties of the copolymer and increases its stability to humidity.

Of course, vinyl acetate may not be present in the copolymer, in which case the number of vinyl alcohol monomers is 100% of the total number of vinyl alcohol and vinyl acetate monomers and the total amount of vinyl acetate and vinyl alcohol monomers corresponds to the amount of the vinyl alcohol monomer in the copolymer.

Copolymerising vinyl alcohol (and optionally vinyl acetate) with one or more other monomers may be advantageous compared to using only vinyl alcohol and vinyl acetate. For example, the stability of the polymer to humidity may be improved. Therefore, the total amount of vinyl alcohol and vinyl acetate monomers in the vinyl alcohol copolymer is preferably less than 95 wt. %, preferably less than 90 wt. %, based on the total weight of the copolymer.

The total amount of vinyl alcohol and vinyl acetate monomers in the vinyl alcohol copolymer may be from 20 wt.% to 95 wt.%, preferably from 40 wt.% to 95 wt.%, more preferably from 50 wt.% to 95 wt.%, more preferably from 60 wt.% to 95 wt.%, more preferably from 70 wt.% to 95 wt.%, most preferably from 80 wt.% to 95 wt.%, based on the total weight of the copolymer.

Alternatively, the total amount of vinyl alcohol and vinyl acetate monomers in the vinyl alcohol copolymer may be from 20 wt.% to 90 wt.%, preferably from 40 wt.% to 90 wt.%, more preferably from 50 wt.% to 90 wt.%, more preferably from 60 wt.% to 90 wt.%, more preferably from 70 wt.% to 90 wt.%, most preferably from 80 wt.% to 90 wt.%, based on the total weight of the copolymer.

In one preferred aspect of the invention, the total amount of vinyl alcohol and vinyl acetate monomers in the vinyl alcohol copolymer is at least 50 wt.%, based on the total weight of the copolymer, preferably from 50 wt.% to 95 wt.%, more preferably from 50 wt.% to 90 wt.%.

The vinyl alcohol homopolymer or copolymer may be modified. For example, one or more vinyl alcohol monomers may be modified by carboxylation, etherification, acetalization, carbamation, amination, sulfation, or esterification. In which case, the hydroxyl group may be substituted by another functional group such as carboxyl, ethylene oxide, acetyl, acetoacetyl, sulfonic, amino, or an ammonium salt group.

One or more side chains may also be bonded to vinyl alcohol monomers in the homopolymer or copolymer. Each side chain may be independently selected from polyethylene glycol, polyacrylic acid, polylactic acid, and amylose.

In order to improve its resistance to humidity, the vinyl alcohol homopolymer or copolymer may be cross-linked. The vinyl alcohol homopolymer or copolymer may be cross-linked by heat, UV (ultraviolet radiation), and/or a cross-linking agent.

Any suitable cross-linking agent may be used. For example, the cross-linking agent may be selected from the group consisting of alcohols, straight-chain polyols, branched-chain polyols, aldehydes, amines, polyamines, hydrazides, polyhydrazides, metal salts, acids, and organic acids. Preferably, the cross-linking agent is selected from the group consisting of ethylene glycol, formaldehyde, acetaldehyde, glyoxal, malondialdehyde, succindialdehyde, glutaraldehyde, meta-xylenediamine, 1,3-bis (aminomethyl) cyclohexane, adipic dihydrazide, dodecane dihydrazide, polyol carbonyl adduct, sodium borate, ammonium zirconium carbonate, sodium glyoxylate, malonic acid, succinic acid, adipic acid, boric acid, and sulfosuccinic acid.

Any suitable monomers can be copolymerised with vinylidene chloride, vinyl alcohol, and/or vinyl acetate in the copolymers described herein, such as ethylenically-unsaturated monomers. As used herein, "ethylenically-unsaturated monomer" refers to a monomer comprising a carbon-carbon double bond.

In one preferred feature of the invention, the vinylidene chloride copolymer may be a copolymer of vinylidene chloride and one or more additional monomers and/or the vinyl alcohol copolymer may be a copolymer of vinyl alcohol, one or more additional monomers, and optionally vinyl acetate. The one or more additional monomers may be independently selected from the group consisting of alkenes, acrylates, vinyl halides, vinyl amides, styrenes, vinyl alcohols, vinyl esters, vinyl ethers, vinyl ketones, maleic acid or maleates, fumaric acid or fumarates, itaconic acid or itaconates, crotonic acid or crotonates.

For example, the vinylidene chloride copolymer may be a copolymer of vinylidene chloride and one or more monomers of formula (I). The vinyl alcohol copolymer may be a copolymer of vinyl alcohol, one or more monomers of formula (I), and optionally vinyl acetate: 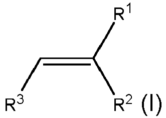
wherein each R¹ is independently selected from the group consisting of H, C₁-C₁₀ alkyl, C₃-C₁₀ cycloalkyl, C₁-C₁₀ alkoxy, (C₁-C₅ alkyl)-O-(C₁-C₅ alkyl), C₆-C₁₀ aryl, C₁-C₉ heteroaryl, nitrile, -OH, halo, -C(O)R⁴, -C(O)OR⁴, -OC(O)R⁴, -C(O)NHR⁴, and -NHC(O)R⁴;
each R² is independently selected from the group consisting of H, halo, C₁-C₃ alkyl, -C(O)OR⁵, and -CH₂C(O)OR⁵;
each R³ is independently selected from the group consisting of H, -C(O)OR⁵, and C₁-C₃ alkyl;
each R⁴ is independently selected from the group consisting of H, C₁-C₁₀ alkyl, C₃-C₁₀ cycloalkyl, (C₁-C₅ alkyl)-O-(C₁-C₅ alkyl), C₆-C₁₀ aryl, and C₁-C₉ heteroaryl;
each R⁵ is independently selected from C₁-C₁₀ alkyl;
wherein each C₁-C₁₀ alkyl, C₃-C₁₀ cycloalkyl, C₁-C₁₀ alkoxy, (C₁-C₅ alkyl)-O-(C₁-C₅ alkyl), C₆-C₁₀ aryl and C₁-C₉ heteroaryl is optionally independently substituted with one or more substituents independently selected from -OH, oxo, -SO₂H, -NOz, and halo.

Examples of monomers which can be copolymerised with vinylidene chloride include: ethene, propene, 1-butene, 1-pentene, 1-hexene, 1-heptene, 1-octene, acrylic acid, methyl acrylate, ethyl acrylate, hydroxyethyl acrylate, n-propyl acrylate, isopropyl acrylate, n-butyl acrylate, isobutyl acrylate, tert-butyl acrylate, n-pentyl acrylate, n-hexyl acrylate, cyclohexyl acrylate, n-heptyl acrylate, n-octyl acrylate, 2-ethylhexyl acrylate, phenyl acrylate, methoxyethyl acrylate, chloroethyl acrylate, methacrylic acid, methyl methacrylate, ethyl methacrylate, hydroxyethyl methacrylate, n-propyl methacrylate, isopropyl methacrylate, n-butyl methacrylate, isobutyl methacrylate, tert-butyl methacrylate, n-pentyl methacrylate, n-hexyl methacrylate, cyclohexyl methacrylate, n-heptyl methacrylate, n-octyl methacrylate, 2-ethylhexyl acrylate, phenyl methacrylate, methoxyethyl methacrylate, chloroethyl methacrylate, acrylonitrile, methacrylonitrile, methyl vinyl ketone, phenyl vinyl ketone, methyl vinyl ether, ethyl vinyl ether, divinyl ether, vinyl chloride, vinyl bromide, vinyl alcohol, vinyl acetate, vinyl propionate, vinyl chloroacetate, vinyl naphthalene, styrene, maleic acid, maleic anhydride, fumaric acid, dimethyl maleate, diethyl maleate, dimethyl fumarate, diethyl fumarate, crotonic acid, methyl crotonate, ethyl crotonate, n-propyl crotonate, n-butyl crotonate, itaconic acid, dimethyl itaconate, diethyl itaconate, dibutyl itaconate, acrylamide, methacrylamide, and vinyl pyridine.

Preferably, the vinylidene chloride copolymer is a copolymer of vinylidene chloride and one or more monomers independently selected from the group consisting of ethene, propene, butene, acrylic acid, methyl acrylate, ethyl acrylate, n-propyl acrylate, n-butyl acrylate, hydroxyethyl acrylate, methacrylic acid, methyl methacrylate, ethyl methacrylate, n-propyl methacrylate, n-butyl methacrylate, acrylonitrile, methacrylonitrile, vinyl chloride, styrene, methyl vinyl ketone, vinyl alcohol, vinyl acetate, and itaconic acid.

Examples of monomers which can be copolymerised with vinyl alcohol and optionally vinyl acetate include: ethene, propene, 1-butene, 1-pentene, 1-hexene, 1-heptene, 1-octene, acrylic acid, methyl acrylate, ethyl acrylate, hydroxyethyl acrylate, n-propyl acrylate, isopropyl acrylate, n-butyl acrylate, isobutyl acrylate, tert-butyl acrylate, n-pentyl acrylate, n-hexyl acrylate, cyclohexyl acrylate, n-heptyl acrylate, n-octyl acrylate, 2-ethylhexyl acrylate, phenyl acrylate, methoxyethyl acrylate, chloroethyl acrylate, methacrylic acid, methyl methacrylate, ethyl methacrylate, hydroxyethyl methacrylate, n-propyl methacrylate, isopropyl methacrylate, n-butyl methacrylate, isobutyl methacrylate, tert-butyl methacrylate, n-pentyl methacrylate, n-hexyl methacrylate, cyclohexyl methacrylate, n-heptyl methacrylate, n-octyl methacrylate, 2-ethylhexyl acrylate, phenyl methacrylate, methoxyethyl methacrylate, chloroethyl methacrylate, acrylonitrile, methacrylonitrile, methyl vinyl ketone, phenyl vinyl ketone, methyl vinyl ether, ethyl vinyl ether, divinyl ether, vinyl chloride, vinylidene chloride, vinyl bromide, vinyl propionate, vinyl chloroacetate, vinyl naphthalene, styrene, maleic acid, maleic anhydride, fumaric acid, dimethyl maleate, diethyl maleate, dimethyl fumarate, diethyl fumarate, crotonic acid, methyl crotonate, ethyl crotonate, n-propyl crotonate, n-butyl crotonate, itaconic acid, dimethyl itaconate, diethyl itaconate, dibutyl itaconate, acrylamide, methacrylamide, and vinyl pyridine.

Preferably, the vinyl alcohol copolymer is a copolymer of vinyl alcohol, optionally vinyl acetate, and one or more additional monomers independently selected from the group consisting of ethene, propene, butene, acrylic acid, methyl acrylate, ethyl acrylate, propyl acrylate, butyl acrylate, hydroxyethyl acrylate, methacrylic acid, methyl methacrylate, ethyl methacrylate, propyl methacrylate, butyl methacrylate, acrylonitrile, methacrylonitrile, vinyl chloride, vinylidene chloride, styrene, methyl vinyl ketone, and itaconic acid.

In a preferred embodiment, the vinylidene chloride copolymer may be a copolymer of vinylidene chloride and one or more monomers selected from vinyl chloride, methyl acrylate, methyl methacrylate, hydroxyethyl acrylate, acrylonitrile, methacrylonitrile, vinyl alcohol, and vinyl acetate.

In another preferred embodiment, the vinylidene chloride copolymer may be a copolymer of vinylidene chloride, methyl acrylate, acrylonitrile, and hydroxyethyl acrylate.

In another preferred embodiment, the vinylidene chloride copolymer may be a copolymer of vinylidene chloride, methyl acrylate, and vinyl chloride.

In another preferred embodiment, the vinylidene chloride copolymer may be a copolymer of vinylidene chloride and vinyl chloride.

In another preferred embodiment, the vinylidene chloride copolymer may be a copolymer of vinylidene chloride and methyl acrylate.

In another preferred embodiment, the vinyl alcohol copolymer may be a copolymer of vinyl alcohol, optionally vinyl acetate, and one or more monomers selected from ethene, propene, butene, methyl acrylate, methyl methacrylate, butyl acrylate, hydroxyethyl acrylate, vinyl chloride and vinylidene chloride.

The total thickness of the coating on each outer surface of the polymeric film may independently be from 0.1 µm to 20 µm, preferably from 0.1 µm to 10 µm.

The at least one layer of the coating comprising the polymer may have a thickness of from 0.1 µm to 5 µm, preferably from 0.3 µm to 1.5 µm. Alternatively, the at least one layer of the coating comprising the polymer may have a thickness of from 0.1 µm to 5 µm, more preferably from 0.2 µm to 2.0 µm, most preferably from 0.2 µm to 1.0 µm.

The coating can comprise the polymer in any suitable amount in order to provide the film with low oxygen permeability. When a vinyl alcohol homopolymer or copolymer is used as the polymer, the at least one layer of the coating comprising the polymer may comprise at least 1 wt. % of the polymer, more preferably at least 3 wt. %, more preferably at least 6 wt. %, based on the total dry weight of the at least one layer of the coating comprising the polymer. When a vinylidene chloride homopolymer or copolymer is used as the polymer, the at least one layer of the coating comprising the polymer preferably comprises at least 30 wt. %, of the polymer, more preferably at least 50 wt. %, most preferably at least 70 wt. % based on the total dry weight of the at least one layer of the coating comprising the polymer. By "dry weight" it is meant the weight of the coating once the solvent has been removed.

By depositing a solution of the polymer, it is possible to form a very thin coating on the surface of the polymeric film, which avoids compromising the flexibility and mechanical properties of the polymeric film. Coextruded barrier layers are typically much thicker, which is detrimental to flexibility and the mechanical properties of the film. Furthermore, the weight of the thin barrier coating is negligible compared to the weight of the film as a whole. Therefore, the small amount of coating materials present does not significantly affect the recyclability of the film. Films with thicker coextruded layers (such as EVOH and polyamide) are more difficult to recycle and the recycled material produced from their scraps after the useful life of the film are of poorer quality and lesser commercial value than recycled resins of polyethylene that do not contain such co-extruded layers (e.g. EVOH and polyamide).

In addition to the polymer, each coating may independently comprise one or more additional components.

For example, each coating may independently comprise one or more inorganic particles independently selected from the group consisting of SiOz, Al₂O₃, TiOz, AlCl₃, MgO, ZnO, CuO, Fe₂O₃, clays, and combinations thereof.

Each coating may independently comprise one or more organic molecules independently selected from the group consisting of acrylic resins, epoxy resins, polyurethanes, polyimines, polysiloxanes, surfactants, binders and combinations thereof.

In a preferred aspect of the invention, the vinylidene chloride copolymer comprises at least 50 wt. % of the vinylidene chloride monomer, based on the total weight of the copolymer, and the copolymer is a copolymer of vinylidene chloride and one or more monomers independently selected from the group consisting of alkenes, acrylates, vinyl halides, vinyl amides, styrenes, vinyl esters, vinyl ethers, vinyl ketones, maleic acid or maleates, fumaric acid or fumarates, itaconic acid or itaconates, crotonic acid or crotonates.

In another preferred aspect of the invention, the vinylidene chloride copolymer comprises at least 50 wt. % of the vinylidene chloride monomer, based on the total weight of the copolymer, and the copolymer is a copolymer of vinylidene chloride and one or more monomers independently selected from the group consisting of acrylic acid, methyl acrylate, ethyl acrylate, propyl acrylate, butyl acrylate, hydroxyethyl acrylate, methacrylic acid, methyl methacrylate, ethyl methacrylate, propyl methacrylate, butyl methacrylate, acrylonitrile, methacrylonitrile, vinyl chloride, styrene, methyl vinyl ketone, vinyl acetate, and itaconic acid.

In another preferred aspect of the invention, the vinylidene chloride copolymer comprises at least 50 wt. % of the vinylidene chloride monomer, based on the total weight of the copolymer, and the copolymer is a copolymer of vinylidene chloride and one or more monomers independently selected from the group consisting of vinyl chloride, methyl acrylate, hydroxyethyl acrylate, methyl methacrylate, acrylonitrile, methacrylonitrile, and vinyl acetate.

In another preferred aspect of the invention, the coating comprises a vinylidene chloride copolymer comprising from 50 wt. % to 95 wt. % of the vinylidene chloride monomer, based on the total weight of the copolymer, and the copolymer is a copolymer of vinylidene chloride and one or more monomers independently selected from the group consisting of vinyl chloride, methyl acrylate, hydroxyethyl acrylate, methyl methacrylate, acrylonitrile, methacrylonitrile, and vinyl acetate.

In another preferred aspect of the invention, the one or more UV stabilisers comprises a Hindered Amine Light Stabilizer; and the vinylidene chloride copolymer comprises at least 50 wt. % of the vinylidene chloride monomer, based on the total weight of the copolymer.

In another preferred aspect of the invention, the one or more UV stabilisers comprises a Hindered Amine Light Stabilizer; and the vinylidene chloride copolymer comprises at least 50 wt. % of the vinylidene chloride monomer, based on the total weight of the copolymer, and the copolymer is a copolymer of vinylidene chloride and one or more monomers independently selected from the group consisting of alkenes, acrylates, vinyl halides, vinyl amides, styrenes, vinyl esters, vinyl ethers, vinyl ketones, maleic acid or maleates, fumaric acid or fumarates, itaconic acid or itaconates, crotonic acid or crotonates.

In another preferred aspect of the invention, the one or more UV stabilisers comprises a Hindered Amine Light Stabilizer; and the vinylidene chloride copolymer comprises at least 50 wt. % of the vinylidene chloride monomer, based on the total weight of the copolymer, and the copolymer is a copolymer of vinylidene chloride and one or more monomers independently selected from the group consisting of acrylic acid, methyl acrylate, ethyl acrylate, propyl acrylate, butyl acrylate, hydroxyethyl acrylate, methacrylic acid, methyl methacrylate, ethyl methacrylate, propyl methacrylate, butyl methacrylate, acrylonitrile, methacrylonitrile, vinyl chloride, styrene, methyl vinyl ketone, vinyl acetate, and itaconic acid.

In another preferred aspect of the invention, the one or more UV stabilisers comprises a Hindered Amine Light Stabilizer; and the vinylidene chloride copolymer comprises at least 50 wt. % of the vinylidene chloride monomer, based on the total weight of the copolymer, and the copolymer is a copolymer of vinylidene chloride and one or more monomers independently selected from the group consisting of vinyl chloride, methyl acrylate, hydroxyethyl acrylate, methyl methacrylate, acrylonitrile, methacrylonitrile, and vinyl acetate.

In another preferred aspect of the invention, the one or more UV stabilisers comprises a Hindered Amine Light Stabilizer; and the coating comprises a vinylidene chloride copolymer comprising from 50 wt. % to 95 wt. % of the vinylidene chloride monomer, based on the total weight of the copolymer, and the copolymer is a copolymer of vinylidene chloride and one or more monomers independently selected from the group consisting of vinyl chloride, methyl acrylate, hydroxyethyl acrylate, methyl methacrylate, acrylonitrile, methacrylonitrile, and vinyl acetate.

In another preferred aspect of the invention, the number of vinyl alcohol monomers in the vinyl alcohol copolymer is at least 97% of the total number of vinyl alcohol and vinyl acetate monomers in the copolymer, wherein the vinyl alcohol copolymer is cross-linked with a cross-linking agent independently selected from the group consisting of glyoxal, glutaraldehyde, meta-xylenediamine, 1,3-bis (aminomethyl) cyclohexane, adipic dihydrazide, dodecane dihydrazide, ammonium zirconium carbonate, sodium glyoxylate, boric acid, and sulfosuccinic acid.

In another preferred aspect of the invention, the vinyl alcohol copolymer is a copolymer of vinyl alcohol, one or more monomers selected from ethene and butyl acrylate, and optionally vinyl acrylate, wherein the number of vinyl alcohol monomers in the vinyl alcohol copolymer is at least 97% of the total number of vinyl alcohol and vinyl acetate monomers in the copolymer, and wherein the copolymer is cross-linked with one or more cross-linking agents independently selected from the group consisting of glyoxal, glutaraldehyde, meta-xylenediamine, 1,3-bis (aminomethyl) cyclohexane, adipic dihydrazide, dodecane dihydrazide, ammonium zirconium carbonate, sodium glyoxylate, boric acid, and sulfosuccinic acid.

In another preferred aspect of the invention, the vinyl alcohol copolymer is a copolymer of vinyl alcohol, one or more monomers selected from ethene and butyl acrylate, and optionally vinyl acrylate, wherein the number of vinyl alcohol monomers in the vinyl alcohol copolymer is at least 97% of the total number of vinyl alcohol and vinyl acetate monomers in the copolymer, and wherein the copolymer is cross-linked with one or more cross-linking agents independently selected from the group consisting of glyoxal, glutaraldehyde, meta-xylenediamine, 1,3-bis (aminomethyl) cyclohexane, adipic dihydrazide, dodecane dihydrazide, ammonium zirconium carbonate, sodium glyoxylate, boric acid, and sulfosuccinic acid, and wherein the coating further comprise one or more inorganic particles independently selected from the group consisting of SiOz, Al₂O₃, TiOz, AlCl₃, MgO, ZnO, CuO, Fe₂O₃, clays.

In another preferred aspect of the invention, the number of vinyl alcohol monomers in the vinyl alcohol copolymer is at least 97% of the total number of vinyl alcohol and vinyl acetate monomers in the copolymer, wherein one or more vinyl alcohol monomers in the copolymer has been modified by carboxylation, etherification, acetalization, carbamation, amination, sulfation, or esterification, and wherein the copolymer is cross-linked with one or more cross-linking agents independently selected from the group consisting of glyoxal, glutaraldehyde, meta-xylenediamine, 1,3-bis (aminomethyl) cyclohexane, adipic dihydrazide, dodecane dihydrazide, ammonium zirconium carbonate, sodium glyoxylate, boric acid, and sulfosuccinic acid.

In another preferred aspect of the invention, the number of vinyl alcohol monomers in the vinyl alcohol copolymer is at least 97% of the total number of vinyl alcohol and vinyl acetate monomers in the copolymer, wherein one or more vinyl alcohol monomers in the copolymer has been modified by carboxylation, etherification, acetalization, carbamation, amination, sulfation, or esterification, and wherein the copolymer is cross-linked with one or more cross-linking agents independently selected from the group consisting of glyoxal, glutaraldehyde, meta-xylenediamine, 1,3-bis (aminomethyl) cyclohexane, adipic dihydrazide, dodecane dihydrazide, ammonium zirconium carbonate, sodium glyoxylate, boric acid, and sulfosuccinic acid, and wherein the coating further comprises one or more inorganic particles independently selected from the group consisting of SiO₂, Al₂O₃, TiOz, AlCl₃, MgO, ZnO, CuO, Fe₂O₃, and clays.

In another preferred aspect of the invention, the number of vinyl alcohol monomers in the vinyl alcohol copolymer is at least 97% of the total number of vinyl alcohol and vinyl acetate monomers in the copolymer, wherein one or more vinyl alcohol monomers in the copolymer has been modified by carboxylation, etherification, acetalization, carbamation, amination, sulfation, or esterification, and wherein the copolymer is cross-linked with one or more cross-linking agents independently selected from the group consisting of glyoxal, glutaraldehyde, meta-xylenediamine, 1,3-bis (aminomethyl) cyclohexane, adipic dihydrazide, dodecane dihydrazide, ammonium zirconium carbonate, sodium glyoxylate, boric acid, and sulfosuccinic acid, and wherein the coating further comprises one or more organic molecules independently selected from the group consisting of acrylic resins, epoxy resins, polyurethanes, polyimines, polysiloxanes, surfactants, and binders.

### Agricultural structures

The films of the invention are suitable for covering agricultural structures. The term "agricultural structures" as used herein, refers to structures designed for agricultural purposes such as greenhouses, silage pits, silage bunkers, etc.

As such, the invention also includes an agricultural structure, characterised in that at least a portion thereof is covered with a film of the invention. Further, the invention includes a method of covering an agricultural structure, comprising covering at least a portion of the agricultural structure with a film of the invention.

In one embodiment, the film may cover substantially all of the agricultural structure.

For example, the films of the invention may be used to cover a greenhouse. The film may cover the greenhouse such that the "internal" surface (i.e. inside the greenhouse) of the polymeric film has a coating as described herein. The coating therefore protects the layers of the polymeric film from agrochemicals used inside the greenhouse.

The films of the invention may also be used to cover silage. The film may cover the silage such that the "external" surface of the polymeric film (i.e. the surface of the film not in contact with the silage) or the "internal surface" (i.e. the surface of the film in contact with the silage), has a coating as described herein. This coating acts as an external barrier, inhibiting the transmission of oxygen through the film and into contact with the silage.

### Method of producing the films of the invention

The films of the invention can be produced by any suitable method known to those skilled in the art.

The films of the invention may be produced by first providing a polymeric film comprising one or more layers, wherein at least one of the layers comprises one or more UV stabilisers, as described herein. Subsequently, either on line during production of the film, or off-line as a separate step, a coating, as described herein, is deposited onto at least one outer surface of the polymeric film, the coating comprising at least one layer comprising a polymer.

The method may comprise producing the polymeric film via blown-film or cast-film extrusion or co-extrusion.

Prior to deposition of the coating, the outer surface of the polymeric film may be treated with corona and/or plasma. This may improve the adhesion of the coating to the outer surface of the polymeric film.

Each layer of the coating is deposited as a solution comprising the components of that layer. The first layer of the coating is deposited onto the surface of the polymeric film. Once the first layer of the coating has dried, the second layer (if present) is deposited on top of the first layer. This process is continued to produce a coating with any number of layers.

The at least one layer of the coating comprising the polymer is deposited as a solution comprising the polymer. Any suitable solvent may be used, such as water. When a vinylidene chloride homopolymer or copolymer is used as the polymer, the solution may comprise from 5% w.w to 90 % w.w of the polymer, preferably from 20% w.w to 70% w.w, most preferably from 50% w.w to 60% w.w. When a vinyl alcohol homopolymer or copolymer is used as the polymer, the solution may comprise from 1% w.w to 20 % w.w of the polymer, preferably from 2% w.w to 10% w.w, most preferably from 3% w.w to 6% w.w.

The coating may be deposited by any suitable coating technique known to those skilled in the art. Preferably, the coating is deposited via dipping, spraying, flexography, plasma, laser, gravure printing, reverse roll, roll to roll, knife-over-all, rod coater, jet printing, or slot die coating techniques.

Once deposited, the polymeric film may be annealed and rapidly cooled to stabilize the coating.

### EXAMPLES

### Example 1

A transparent greenhouse film having a thickness of 180 µm and a width of 12 meters was produced on a seven-layer blown film line with an 1800 mm die, at an output of 1300 kg/h and a speed of 11 m/min. The composition of the layers of the film is show in Table 1 below. The film was corona treated and sprayed on one side with a 50% aqueous solution of a copolymer of vinylidene chloride, methyl acrylate, acrylonitrile, and hydroxyethyl acrylate (Diofan 050 from Solvay), to form a coating. The thickness of the coating was 0.8 µm.

**Table 1**

| | |
|---|---|
| Layer 1 | LDPE+MLLDPE+UV |
| Layer 2 | LDPE+MLLDPE+UV |
| Layer 3 | LDPE+LLDPE+UV |
| Layer 4 | LDPE+LLDPE+UV |
| Layer 5 | LDPE+LLDPE+UV |
| Layer 6 | EVA+UV+IR |
| Layer 7 | LDPE+MLLDPE+UV |

| | |
|---|---|
| LDPE = Low Density Polyethylene; LLDPE = Linear Low Density Polyethylene; MLLDPE = Metallocene Linear Low density Polyethylene; EVA = Ethylene Vinyl Acetate copolymer with 14% Vinyl Acetate content; UV = UV masterbatch containing combinations of UV stabilizers (UV20H containing 20% HALS Chimassorb 944); IR = IR masterbatch containing an infrared absorber. | |

### Example 2

A black/white silage film having a thickness of 100 µm and a width of 12 meters wide was produced on a seven-layer blown film line with an 1800 mm die, at an output of 1300 kg/h and a speed of 19 m/min. The composition of the layers of the film is shown in Table 2 below. The film was corona treated and then immersed in a tank containing a 58% w.w. aqueous solution of a copolymer of vinylidene chloride (Diofan 063 from Solvay), to form a coating of the polymer on one side of the film. The thickness of the coating was 1 µm. Immediately after dipping of the film, it passed through dryers where the water was evaporated, the film was cooled and wrapped in rolls.

**Table 2**

| | |
|---|---|
| Layer 1 | LDPE+MLLDPE+White+UV |
| Layer 2 | LDPE+MLLDPE+White+UV |
| Layer 3 | LDPE+LLDPE+UV |
| Layer 4 | LDPE+LLDPE+UV |
| Layer 5 | LDPE+LLDPE+UV |
| Layer 6 | LDPE+MLLDPE+Black |
| Layer 7 | LDPE+MLLDPE+Black |

| | |
|---|---|
| White = White masterbatch containing 70% Titanium Dioxide in PE carrier; Black = Black masterbatch containing 40% carbon black in PE carrier. The remaining abbreviations in Table 2 are as defined above for Table 1. | |

### Comparative Example 1

A seven-layer film having a thickness of 180 µm as defined in Table 3 below.

**Table 3**

| | |
|---|---|
| Layer 1 | LDPE+MLLDPE+UV |
| Layer 2 | LDPE+MLLDPE+UV |
| Layer 3 | LDPE+LLDPE+UV |
| Layer 4 | LDPE+LLDPE+UV |
| Layer 5 | LDPE+LLDPE+UV |
| Layer 6 | EVA+UV+IR |
| Layer 7 | LDPE+MLLDPE+UV |

The abbreviations in Table 3 are defined as above.

### Comparative Example 2

A seven-layer 100 µm silage film having a 2.5 µm EVOH layer in the middle. The composition of the layers of the film is shown in Table 4 below.

**Table 4**

| | |
|---|---|
| Layer 1 | LDPE+MLLDPE+UV |
| Layer 2 | LDPE+MLLDPE+Green+UV |
| Layer 3 | LDPE+TIE+UV |
| Layer 4 | EVOH 44% |
| Layer 5 | LLDPE+TIE+UV |
| Layer 6 | LDPE+MLLDPE+Silver+UV |
| Layer 7 | LDPE+MLLDPE+UV |

| | |
|---|---|
| Green = Green masterbatch containing green pigment in PE carrier; Silver = Silver masterbatch, containing aluminum pigment ion PE carrier; EVOH 44% = Ethylene Vinyl Alcohol 44% mol; TIE = tie layer resin. The remaining abbreviations in Table 4 are defined as above. | |

### Permeability to Oxygen

The oxygen permeability of the films for the examples and comparative examples was measured according to standard EN ISO 15105-2 (23°C, 0% RH). The results are shown in Table 5 below.

**Table 5**

| **Example** | **Oxygen Permeability (cm³/cm²/day)** |
|---|---|
| **Example 1** | **10 at 1 bar** |
| **Comparative Example 1** | **900 at 1 bar** |
| **Example 2** | **15 at 0.2 bar** |
| **Comparative Example 2** | **14 at 0.2 bar** |

The film of Example 1, having a coating comprising a vinylidene chloride copolymer on the surface of the film, has a significantly lower oxygen permeability than Comparative Example 1, without such a coating. This demonstrates that the coating comprising a vinylidene chloride homopolymer or copolymer provides the film with a low oxygen permeability.

### Permeability to Agrochemicals

The films of Example 1 and Comparative Example 1 were used to cover two identical metal structures (dimensions of the metal structure: 1850 cm x 1100 cm x 1000 cm). A sulphur burner, which sublimes sulphur using an infrared lamp, was hung from the middle of the roof of each metal structure (and at distance of 40 cm from it). The sulphur burner was turned on for 30 minutes a day for a total of 3 days. The sulphur burner acts as a source of sulphur inside the metal structure, to simulate agrochemicals decomposing under the influence of heat and UV radiation and creating active compounds, such as sulphur.

Afterwards, film samples were taken from both films at the top of the two structures. The film samples were mechanically rubbed to remove the sulphur from their surface and the sulphur concentrations were then measured using a sulphur analyser from Mitsubishi Chemical.

The results of the sulphur analysis are shown in Table 6 below. As can be seen, the sulphur content of the sample from the film of Example 1 is significantly lower than in the sample of the film from Comparative Example 1. This demonstrates that the oxygen barrier coating on the outer surface of the polymeric film of Example 1 reduces the permeability of the film to sulphur thereby reducing the deactivation of the UV stabilisers in the polymeric film. The films of the present invention thus demonstrate a reduced susceptibility to photodegradation in the presence of agrochemicals.

**Table 6**

| **Example** | **Sulphur content (ppm)** |
|---|---|
| **Example 1** | **384** |
| **Comparative Example 1** | **1398** |

### Dart Drop Impact Resistance

The dart drop impact resistance of the films of Example 2 and Comparative Example 2 was measured according to standard EN ISO 77651. The results are shown in Table 7 below.

**Table 7**

| **Example** | **Dart Drop Impact Resistance (gr)** |
|---|---|
| **Example 2** | **900** |
| **Comparative Example 2** | **500** |

The film of Comparative Example 2 comprises a coextruded EVOH barrier layer in the middle of the film. This provides the film with an oxygen permeability of 14 cm³/cm²/day at 0.2 bar, as referenced above. However, this coextruded barrier layer negatively affects the mechanical properties of the film. For example, the dart drop impact resistance of the film of Comparative Example 2 is only 500 gr.

In contrast, the film of Example 2 has a similarly low oxygen permeability of 15 cm³/cm²/day at 0.2 bar, but a significantly better dart drop impact resistance of 900 gr. Therefore, the barrier coating of Example 2 provides the film with a low oxygen permeability, but improved mechanical properties compared to the coextruded barrier layer of comparative Example 2.

This demonstrates that the films of the present invention have low permeability to oxygen gas (and therefore a reduced susceptibility to photodegradation in the presence of agrochemicals as demonstrated above by Example 1), while maintaining excellent mechanical properties.

### Permeability to Water Vapour

The permeability of the films of Example 1 and Comparative Example 1 to water vapour were measured according to standard ASTM E96 (T=38°C, Δ(RH)=90%). The results are shown in Table 8 below.

**Table 8**

| **Example** | **Permeability to Water Vapour (g/m²/day)** |
|---|---|
| **Example 1** | **2.4** |
| **Comparative Example 1** | **2.4** |

### Comparative Example 3

A coextruded film was prepared with the composition as defined in Table 9 below.

**Table 9**

| | |
|---|---|
| Layer 1 | MLLDPE + additives |
| Layer 2 | MLLDPE + additives + tie materials |
| Layer 3 | MLLDPE + 56% polyamide + additives |

The mechanical properties of this film are detailed in Table 10 below.

**Table 10**

| | |
|---|---|
| **Strength, machine direction (Mpa)** | 21.0 |
| **Strength, transverse direction (Mpa)** | 16.0 |
| **Elongation, machine direction (%)** | 408 |
| **Elongation, transverse direction (%)** | 419 |
| **Tear (gf/mic)** | 3.4 |
| **Dart Drop (gr)** | 550 |
| **IRT (%)** | 6.2 |
| **GLT (%)** | 84.3 |
| **Diff. T. (%)** | 70.2 |

| | |
|---|---|
| IRT = Infrared transmittance; GLT = Global light transmittance; Diff. T. = Diffused transmittance. | |

It can be seen from Table 10 that the presence of a coextruded layer comprising polyamide in the film results in poor mechanical properties. The films of the present invention having a barrier coating do not suffer from these problems. For example, the film of Comparative Example 3 has a dart drop impact resistance of only 550 gr, whereas the film of Example 2 of the invention has a significantly higher dart drop impact resistance of 900 gr.

## Claims

1. A film for covering agricultural structures, comprising:
a) a polymeric film having one or more layers, wherein at least one of the layers comprises one or more UV stabilisers; and
b) a coating on at least one outer surface of the polymeric film, the coating comprising at least one layer comprising a polymer, such that the film has an oxygen permeability below 500 ml/m²/bar/day at 23°C and 0% relative humidity, as measured according to EN ISO 15105-2,
wherein each layer of the coating is formed by depositing a solution to form a layer and drying the layer.

2. A film according to claim 1, wherein the film has an oxygen permeability below 200 ml/m²/bar/day, preferably below 100 ml/m²/bar/day; and/or
wherein the film has a permeability to water vapour below 100 g/m²/day, preferably below 50 g/m²/day, most preferably below 10 g/m²/day at 38 °C and 90% relative humidity, as measured according to ASTM E96; and/or
wherein the polymeric film has from 1 to 100 layers, preferably from 3 to 11 layers; and/or
wherein the polymeric film is obtainable by extrusion or co-extrusion, preferably blown-film or cast-film extrusion or co-extrusion; and/or
wherein the film has a total thickness of from 25 µm to 500 µm and a total width of from 1 m to 60 m.

3. A film according to any preceding claim, wherein the at least one layer of the coating comprising the polymer has a thickness of from 0.1 µm to 5 µm, preferably from 0.1 µm to 2.0 µm, most preferably from 0.2 µm to 1.0 µm and/or
wherein the coating comprises one or more inorganic particles independently selected from the group consisting of SiO₂, Al₂O₃, TiOz, AlCl₃, MgO, ZnO, CuO, Fe₂O₃, clays, and combinations thereof; and/or one or more organic molecules independently selected from the group consisting of acrylic resins, epoxy resins, polyurethanes, polyimines, polysiloxanes, surfactants, binders and combinations thereof.

4. A film according to any preceding claim, wherein the polymer in the coating is a vinylidene chloride homopolymer or copolymer or a vinyl alcohol homopolymer or copolymer.

5. A film according to claim 4, wherein the vinylidene chloride copolymer comprises at least 20 wt. % of the vinylidene chloride monomer, preferably at least 40 wt. %, more preferably at least 50 wt. %, more preferably at least 60 wt. %, more preferably at least 70 wt. % most preferably at least 80 wt. %, based on the total weight of the copolymer; and/or
wherein the vinylidene chloride copolymer comprises less than 95 wt. % of the vinylidene chloride monomer, preferably less than 90 wt. %, based on the total weight of the copolymer.

6. A film according to claim 4 or 5, wherein the vinyl alcohol copolymer is a copolymer of vinyl alcohol and vinyl acetate.

7. A film according to any of claims 4 to 6, wherein the total amount of vinyl alcohol and vinyl acetate monomers in the vinyl alcohol copolymer is at least 20 wt. %, preferably at least 40 wt. %, more preferably at least 50 wt. %, more preferably at least 60 wt. %, more preferably at least 70 wt. % most preferably at least 80 wt. %, based on the total weight of the copolymer; and/or
wherein the total amount of vinyl alcohol and vinyl acetate monomers in the vinyl alcohol copolymer is less than 95 wt. %, preferably less than 90 wt. %, based on the total weight of the copolymer; and/or
wherein the number of vinyl alcohol monomers in the vinyl alcohol copolymer is at least 80% of the total number of vinyl alcohol and vinyl acetate monomers, preferably at least 95%, most preferably at least 97%; and/or
wherein one or more vinyl alcohol monomers in the vinyl alcohol homopolymer or copolymer has been modified by carboxylation, etherification, acetalization, carbamation, amination, sulfation, or esterification; and/or one or more vinyl alcohol monomers are bonded to side chains.

8. A film according to any of claims 4 to 7, wherein the vinyl alcohol homopolymer or copolymer is cross-linked, preferably the homopolymer or copolymer is cross-linked by heat, UV, and/or a cross-linking agent;
preferably wherein the cross-linking agent is selected from the group consisting of alcohols, straight-chain polyols, branched-chain polyols, aldehydes, amines, polyamines, hydrazides, polyhydrazides, metal salts, acids and organic acids, preferably the cross-linking agent is selected from the group consisting of ethylene glycol, formaldehyde, acetaldehyde, glyoxal, malondialdehyde, succindialdehyde, glutaraldehyde, meta-xylenediamine, 1,3-bis (aminomethyl) cyclohexane, adipic dihydrazide, dodecane dihydrazide, polyol carbonyl adduct, sodium borate, ammonium zirconium carbonate, sodium glyoxylate, malonic acid, succinic acid, adipic acid, boric acid, and sulfosuccinic acid.

9. A film according to any of claims 4 to 8, wherein the vinylidene chloride copolymer is a copolymer of vinylidene chloride and one or more monomers of formula (I) and/or the vinyl alcohol copolymer is a copolymer of vinyl alcohol, optionally vinyl acetate, and one or more monomers of formula (I): 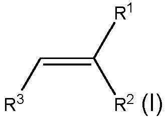 wherein each R¹ is independently selected from the group consisting of H, C₁-C₁₀ alkyl, C₃-C₁₀ cycloalkyl, C₁-C₁₀ alkoxy, (C₁-C₅ alkyl)-O-(C₁-C₅ alkyl), C₆-C₁₀ aryl, C₁-C₉ heteroaryl, nitrile, -OH, halo, -C(O)R⁴, -C(O)OR⁴, -OC(O)R⁴, -C(O)NHR⁴, and -NHC(O)R⁴;
each R² is independently selected from the group consisting of H, halo, C₁-C₃ alkyl, -C(O)OR⁵, and -CH₂C(O)OR⁵;
each R³ is independently selected from the group consisting of H, -C(O)OR⁵, and C₁-C₃ alkyl;
each R⁴ is independently selected from the group consisting of H, C₁-C₁₀ alkyl, C₃-C₁₀ cycloalkyl, (C₁-C₅ alkyl)-O-(C₁-C₅ alkyl), C₆-C₁₀ aryl, and C₁-C₉ heteroaryl;
each R⁵ is independently selected from C₁-C₁₀ alkyl;
wherein each C₁-C₁₀ alkyl, C₃-C₁₀ cycloalkyl, C₁-C₁₀ alkoxy, (C₁-C₅ alkyl)-O-(C₁-C₅ alkyl), C₆-C₁₀ aryl and C₁-C₉ heteroaryl is optionally independently substituted with one or more substituents independently selected from -OH, oxo, -SO₂H, -NOz, and halo.

10. A film according to any of claims 4 to 9, wherein the vinylidene chloride copolymer is a copolymer of vinylidene chloride and one or more additional monomers, wherein the one or more additional monomers are independently selected from the group consisting of alkenes, acrylates, vinyl halides, vinyl amides, styrenes, vinyl alcohols, vinyl esters, vinyl ethers, vinyl ketones, maleic acid or maleates, fumaric acid or fumarates, itaconic acid or itaconates, crotonic acid or crotonates, preferably wherein the one or more additional monomers are independently selected from the group consisting of ethene, propene, butene, acrylic acid, methyl acrylate, ethyl acrylate, propyl acrylate, butyl acrylate, hydroxyethyl acrylate, methacrylic acid, methyl methacrylate, ethyl methacrylate, propyl methacrylate, butyl methacrylate, acrylonitrile, methacrylonitrile, vinyl chloride, styrene, methyl vinyl ketone, vinyl alcohol, vinyl acetate, and itaconic acid; and/or
wherein the vinyl alcohol copolymer is a copolymer of vinyl alcohol, optionally vinyl acetate, and one or more additional monomers, wherein the one or more additional monomers are independently selected from the group consisting of alkenes, acrylates, vinyl halides, vinyl amides, styrenes, vinyl alcohols, vinyl esters, vinyl ethers, vinyl ketones, maleic acid or maleates, fumaric acid or fumarates, itaconic acid or itaconates, crotonic acid or crotonates, preferably wherein the one or more additional monomers are independently selected from the group consisting of ethene, propene, butene, acrylic acid, methyl acrylate, ethyl acrylate, propyl acrylate, butyl acrylate, hydroxyethyl acrylate, methacrylic acid, methyl methacrylate, ethyl methacrylate, propyl methacrylate, butyl methacrylate, acrylonitrile, methacrylonitrile, vinyl chloride, vinylidene chloride, styrene, methyl vinyl ketone, and itaconic acid.

11. A film according to any preceding claim, wherein the coating comprises a vinylidene chloride homopolymer or copolymer.

12. A film according to any preceding claim, wherein the coating comprises more than one layer, wherein at least one layer comprises the polymer; or
wherein the coating comprises a single layer comprising the polymer.

13. A film according to any preceding claim, comprising a coating on both outer surfaces of the polymeric film, wherein each coating is independently as defined in any of claims 1 to 12.

14. A film according to any preceding claim, wherein the one or more layers of the polymeric film each independently comprise one or more polymers independently selected from the group consisting of low density polyethylene (LDPE), low density linear polyethylene (LLDPE), metallocene low density linear polyethylene (MLLDPE), ethylene-vinyl acetate copolymer (EVA), ethylene butyl acrylate copolymer (EBA), high density polyethylene (HDPE), polypropylene (PP), thermoplastic polyurethane (TPU), polyethylene terephthalate (PET), polyvinyl chloride (PVC), polyamide (PA), ethylene-vinyl alcohol copolymer (EVOH), and combinations thereof; and/or
wherein at least one of the layers of the polymeric film further comprises IR absorbers, anti-fogging agents, anti-dripping agents, anti-dust materials, anti-algae materials, adhesion assistant materials, and/or pigments; and/or
wherein the one or more UV stabilisers are independently selected from the group consisting of Hindered Amine Light Stabilizers (HALS), UV-absorbers, and nickel organic complexes; and/or
wherein the one or more UV stabilisers are present in an amount of from 0.1 wt.% to 20 wt.%, preferably from 0.1 wt.% to 10 wt.%, most preferably from 0.1 wt.% to 5 wt.%, based on the total weight of the layer.

15. The use of a coating on at least one outer surface of a polymeric film, the coating comprising at least one layer comprising a polymer, wherein each layer of the coating is formed by depositing a solution to form a layer and drying the layer, and wherein the polymeric film comprises one or more layers, at least one layer comprising one or more UV stabilisers, to reduce the susceptibility of the polymeric film to photodegradation in the presence of agrochemicals; and/or to reduce the permeability of the polymeric film to gas and/or water vapour.

16. The use according to claim 15, wherein the coating reduces the oxygen permeability of the polymeric film to below 500 ml/m²/bar/day at 23°C and 0% relative humidity, as measured according to EN ISO 15105-2.

17. An agricultural structure, **characterised in that** at least a portion thereof is covered with a film according to any of claims 1 to 14.

18. A method of covering an agricultural structure, comprising covering at least a portion of the agricultural structure with a film according to any of claims 1 to 14.

19. A method of producing a film for covering agricultural structures, comprising:
i) providing a polymeric film comprising one or more layers, wherein at least one of the layers comprises one or more UV stabilisers; and
ii) depositing a coating on at least one outer surface of the polymeric film, the coating comprising at least one layer comprising a polymer, such that the film has an oxygen permeability below 500 ml/m²/bar/day at 23°C and 0% relative humidity, as measured according to EN ISO 15105-2,
wherein each layer of the coating is formed by depositing a solution to form a layer and drying the layer.

20. A method of producing a film according to claim 19, wherein the coating is deposited via dipping, spraying, flexography, plasma, laser, gravure printing, reverse roll, roll to roll, knife-over-all, rod coater, jet printing, or slot die; and/or
wherein the outer surface of the polymeric film is treated with corona and/or plasma prior to deposition of the coating; and/or
wherein the method further comprises producing the polymeric film via blown or cast extrusion or co-extrusion.

## Patentansprüche

1. Folie zum Abdecken landwirtschaftlicher Strukturen, umfassend:
a) eine Polymerfolie, die eine oder mehrere Schichten aufweist, wobei mindestens eine der Schichten einen oder mehrere UV-Stabilisatoren umfasst; und
b) eine Beschichtung auf mindestens einer Außenfläche der Polymerfolie, wobei die Beschichtung mindestens eine Schicht umfasst, die ein Polymer umfasst, sodass die Folie eine Sauerstoffdurchlässigkeit von unter 500 ml/m²/bar/Tag bei 23°C und 0% relativer Luftfeuchtigkeit, gemessen nach EN ISO 15105-2, aufweist
wobei jede Schicht der Beschichtung durch Aufbringen einer Lösung zum Bilden einer Schicht und Trocknen der Schicht gebildet wird.

2. Folie nach Anspruch 1, wobei die Folie eine Sauerstoffdurchlässigkeit unter 200 ml/m²/bar/Tag, vorzugsweise unter 100 ml/m²/bar/Tag aufweist; und/oder
wobei die Folie eine Wasserdampfdurchlässigkeit von unter 100 g/m²/Tag, vorzugsweise unter 50 g/m²/Tag, besonders bevorzugt unter 10 g/m²/Tag bei 38 °C und 90 % relativer Luftfeuchtigkeit, gemessen nach ASTM E96, aufweist; und/oder
wobei die Kunststofffolie 1 bis 100 Schichten, vorzugsweise 3 bis 11 Schichten aufweist; und/oder
wobei die Kunststofffolie durch Extrusion oder Coextrusion, vorzugsweise Blasfolien- oder Gießfolienextrusion oder -coextrusion erhalten werden kann; und/oder
wobei die Folie eine Gesamtdicke von 25 µm bis 500 µm und eine Gesamtbreite von 1 m bis 60 m aufweist.

3. Folie nach einem vorstehenden Anspruch, wobei die mindestens eine Schicht der Beschichtung, die das Polymer umfasst, eine Dicke von 0,1 µm bis 5 µm, vorzugsweise von 0,1 µm bis 2,0 µm, besonders bevorzugt von 0,2 µm bis 1,0 µm aufweist; und/oder
wobei die Beschichtung eine oder mehrere anorganische Partikel umfasst, die unabhängig ausgewählt sind aus der Gruppe, bestehend aus SiO₂, Al₂O₃, TiO₂, AlCl₃, MgO, ZnO, CuO, Fe₂O₃, Tonerden und Kombinationen davon; und/oder ein oder mehrere organische Moleküle, unabhängig ausgewählt aus der Gruppe, bestehend aus Acrylharzen, Epoxidharzen, Polyurethanen, Polyiminen, Polysiloxanen, Tensiden, Bindemitteln und Kombinationen davon.

4. Folie nach einem vorstehenden Anspruch, wobei das Polymer in der Beschichtung ein Vinylidenchlorid-Homopolymer oder -Copolymer oder ein Vinylalkohol-Homopolymer oder -Copolymer ist.

5. Folie nach Anspruch 4, wobei das Vinylidenchlorid-Copolymer mindestens 20 Gew.-% des Vinylidenchlorid-Monomers, vorzugsweise mindestens 40 Gew. %, bevorzugter mindestens 50 Gew.-%, bevorzugter mindestens 60 Gew.-%, bevorzugter mindestens 70 Gew.-%, besonders bevorzugt mindestens 80 Gew.-% basierend auf dem Gesamtgewicht des Copolymers umfasst; und/oder
wobei das Vinylidenchlorid-Copolymer weniger als 95 Gew.-% des Vinylidenchlorid-Monomers, bevorzugt weniger als 90 Gew.-% basierend auf dem Gesamtgewicht des Copolymers umfasst.

6. Folie nach Anspruch 4 oder 5, wobei das Vinylalkohol-Copolymer ein Copolymer aus Vinylalkohol und Vinylacetat ist.

7. Folie nach einem der Ansprüche 4 bis 6, wobei die Gesamtmenge an Vinylalkohol- und Vinylacetat-Monomeren im Vinylalkohol-Copolymer mindestens 20 Gew.-%, vorzugsweise mindestens 40 Gew.-%, bevorzugter mindestens 50 Gew. %, bevorzugter mindestens 60 Gew. %, bevorzugter mindestens 70 Gew.-%, besonders bevorzugt mindestens 80 Gew. % basierend auf dem Gesamtgewicht des Copolymers beträgt; und/oder
wobei die Gesamtmenge an Vinylalkohol- und Vinylacetat-Monomeren im Vinylalkohol-Copolymer weniger als 95 Gew.-%, vorzugsweise weniger als 90 Gew.-% basierend auf dem Gesamtgewicht des Copolymers beträgt; und/oder
wobei die Anzahl der Vinylalkohol-Monomere im Vinylalkohol-Copolymer mindestens 80% der Gesamtzahl der Vinylalkohol- und Vinylacetat-Monomere, vorzugsweise mindestens 95 %, besonders bevorzugt mindestens 97 % beträgt; und/oder
wobei ein oder mehrere Vinylalkohol-Monomere im Vinylalkohol-Homopolymer oder -Copolymer durch Carboxylierung, Veretherung, Acetalisierung, Carbamierung, Aminierung, Sulfatierung oder Veresterung modifiziert wurden; und/oder ein oder mehrere Vinylalkohol-Monomere an Seitenketten gebunden sind.

8. Folie nach einem der Ansprüche 4 bis 7, wobei das Vinylalkohol-Homopolymer oder -Copolymer vernetzt ist, vorzugsweise das Homopolymer oder Copolymer durch Wärme, UV und/oder ein Vernetzungsmittel vernetzt ist;
wobei das Vernetzungsmittel vorzugsweise ausgewählt ist aus der Gruppe, bestehend aus Alkoholen, geradkettigen Polyolen, verzweigtkettigen Polyolen, Aldehyden, Aminen, Polyaminen, Hydraziden, Polyhydraziden, Metallsalzen, Säuren und organischen Säuren; wobei das Vernetzungsmittel vorzugsweise ausgewählt ist aus der Gruppe, bestehend aus Ethylenglykol, Formaldehyd, Acetaldehyd, Glyoxal, Malondialdehyd, Succindialdehyd, Glutaraldehyd, Meta-Xylendiamin, 1,3-Bis(aminomethyl)cyclohexan, Adipinsäuredihydrazid, Dodecandihydrazid, Polyolcarbonyl-Addukt, Natriumborat, Ammoniumzirkoniumcarbonat, Natriumglyoxylat, Malonsäure, Bernsteinsäure, Adipinsäure, Borsäure und Sulfobernsteinsäure.

9. Folie nach einem der Ansprüche 4 bis 8, wobei das Vinylidenchlorid-Copolymer ein Copolymer aus Vinylidenchlorid und einem oder mehreren Monomeren der Formel (I) ist und/oder das Vinylalkohol-Copolymer ein Copolymer aus Vinylalkohol, optional Vinylacetat, und einem oder mehreren Monomeren der Formel (I) ist: 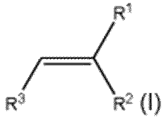
wobei jedes R¹ unabhängig ausgewählt ist aus der Gruppe, bestehend aus H, C₁-C₁₀-Alkyl, C₃-C₁₀-Cycloalkyl, C₁-C₁₀-Alkoxy, (C₁-C₅-Alkyl)-O-(C₁-C₅-Alkyl), C₆-C₁₀-Aryl, C₁-C₉-Heteroaryl, Nitril, -OH, Halogen, -C(O)R⁴, -C(O)OR⁴, -OC(O)R⁴, -C(O)NHR⁴ und -NHC(O)R⁴;
jedes R² unabhängig ausgewählt ist aus der Gruppe, bestehend aus H, Halogen, C₁-C₃-Alkyl, -C(O)OR⁵ und -CH₂C(O)OR⁵;
jedes R³ unabhängig ausgewählt ist aus der Gruppe, bestehend aus H, -C(O)OR⁵ und C₁-C₃-Alkyl;
jedes R⁴ unabhängig ausgewählt ist aus der Gruppe, bestehend aus H, C₁-C₁₀-Alkyl, C₃- C₁₀-Cycloalkyl, (C₁-C₅-Alkyl)-O-(C₁-C₅-Alkyl), C₆-C₁₀-Aryl und C₁-C₉-Heteroaryl;
jedes R⁵ unabhängig ausgewählt ist aus C₁-C₁₀-Alkyl;
wobei jedes C₁-C₁₀-Alkyl, C₃-C₁₀-Cycloalkyl, C₁-C₁₀-Alkoxy, (C₁-C₅-Alkyl)-O-(C₁-C₅-Alkyl), C₆-C₁₀-Aryl und C ₁-C₉-Heteroaryl optional unabhängig mit einem oder mehreren Substituenten substituiert ist, die unabhängig ausgewählt sind aus -OH, Oxo, -SO₂H, -NO₂ und Halogen.

10. Folie nach einem der Ansprüche 4 bis 9, wobei das Vinylidenchlorid-Copolymer ein Copolymer aus Vinylidenchlorid und einem oder mehreren zusätzlichen Monomeren ist, wobei das eine oder die mehreren zusätzlichen Monomere unabhängig ausgewählt sind aus der Gruppe, bestehend aus Alkenen, Acrylaten, Vinylhalogeniden, Vinylamiden, Styrolen, Vinylalkoholen, Vinylestern, Vinylethern, Vinylketonen, Maleinsäure oder Maleaten, Fumarsäure oder Fumaraten, Itaconsäure oder Itaconaten, Crotonsäure oder Crotonaten, wobei vorzugsweise das eine oder die mehreren zusätzlichen Monomere unabhängig ausgewählt sind aus der Gruppe, bestehend aus Ethen, Propen, Buten, Acrylsäure, Methylacrylat, Ethylacrylat, Propylacrylat, Butylacrylat, Hydroxyethylacrylat, Methacrylsäure, Methylmethacrylat, Ethylmethacrylat, Propylmethacrylat, Butylmethacrylat, Acrylnitril, Methacrylnitril, Vinylchlorid, Styrol, Methylvinylketon, Vinylalkohol, Vinylacetat und Itaconsäure; und/oder
wobei das Vinylalkohol-Copolymer ein Copolymer aus Vinylalkohol, optional Vinylacetat, und einem oder mehreren zusätzlichen Monomeren ist, wobei das eine oder mehreren zusätzlichen Monomere unabhängig ausgewählt sind aus der Gruppe, bestehend aus Alkenen, Acrylaten, Vinylhalogeniden, Vinylamiden, Styrolen, Vinylalkoholen, Vinylestern, Vinylethern, Vinylketonen, Maleinsäure oder Maleaten, Fumarsäure oder Fumaraten, Itaconsäure oder Itaconaten, Crotonsäure oder Crotonaten, wobei vorzugsweise das eine oder die mehreren zusätzlichen Monomere unabhängig ausgewählt sind aus der Gruppe, bestehend aus Ethen, Propen, Buten, Acrylsäure, Methylacrylat, Ethylacrylat, Propylacrylat, Butylacrylat, Hydroxyethylacrylat, Methacrylsäure, Methylmethacrylat, Ethylmethacrylat, Propylmethacrylat, Butylmethacrylat, Acrylnitril, Methacrylnitril, Vinylchlorid, Vinylidenchlorid, Styrol, Methylvinylketon und Itaconsäure.

11. Folie nach einem vorstehenden Anspruch, wobei die Beschichtung ein Vinylidenchlorid-Homopolymer oder -Copolymer umfasst.

12. Folie nach einem vorstehenden Anspruch, wobei die Beschichtung mehr als eine Schicht umfasst, wobei mindestens eine Schicht das Polymer umfasst; oder
wobei die Beschichtung eine einzelne Schicht umfasst, die das Polymer umfasst.

13. Folie nach einem vorstehenden Anspruch, die eine Beschichtung auf beiden Außenflächen der Polymerfolie umfasst, wobei jede Beschichtung unabhängig nach in einem der Ansprüche 1 bis 12 definiert ist.

14. Folie nach einem vorstehenden Anspruch, wobei die eine oder mehrere Schichten der Polymerfolie jeweils unabhängig ein oder mehrere Polymere umfassen, unabhängig ausgewählt aus der Gruppe, bestehend aus Polyethylen niedriger Dichte (LDPE), linearem Polyethylen niedriger Dichte (LLDPE), Metallocen-linearem Polyethylen niedriger Dichte (MLLDPE), Ethylen-Vinylacetat-Copolymer (EVA), Ethylen-Butylacrylat-Copolymer (EBA), Polyethylen hoher Dichte (HDPE), Polypropylen (PP), thermoplastischem Polyurethan (TPU), Polyethylenterephthalat (PET), Polyvinylchlorid (PVC), Polyamid (PA), EthylenVinylalkohol-Copolymer (EVOH) und Kombinationen davon; und/oder
wobei mindestens eine der Schichten der Polymerfolie weiter IR-Absorber, Antibeschlagmittel, Antitropfmittel, Antistaubmittel, Antialgenmittel und Hafthilfsmittel und/oder Pigmente umfasst; und/oder
wobei der eine oder die mehreren UV-Stabilisatoren unabhängig ausgewählt sind aus der Gruppe, bestehend aus gehinderten Amin-Lichtstabilisatoren (HALS), UV-Absorbern und Nickel-organischen Komplexen; und/oder
wobei der eine oder die mehreren UV-Stabilisatoren in einer Menge von 0,1 Gew.-% bis 20 Gew.-%, vorzugsweise von 0,1 Gew.-% bis 10 Gew.-%, besonders bevorzugt von 0,1 Gew.-% bis 5 Gew.-% basierend auf dem Gesamtgewicht der Schicht vorhanden sind.

15. Verwendung einer Beschichtung auf mindestens einer Außenfläche einer Polymerfolie, wobei die Beschichtung mindestens eine Schicht umfasst, die ein Polymer umfasst, wobei jede Schicht der Beschichtung durch Aufbringen einer Lösung zum Bilden einer Schicht und Trocknen der Schicht gebildet wird, und wobei die Polymerfolie eine oder mehrere Schichten umfasst, wobei mindestens eine Schicht einen oder mehrere UV-Stabilisatoren umfasst, um die Anfälligkeit der Polymerfolie auf Photoabbau in Gegenwart von Agrochemikalien zu verringern; und/oder um die Gas- und/oder Wasserdampfdurchlässigkeit der Polymerfolie zu verringern.

16. Verwendung nach Anspruch 15, wobei die Beschichtung die Sauerstoffdurchlässigkeit der Polymerfolie auf unter 500 ml/m²/bar/Tag bei 23 °C und 0% relativer Luftfeuchtigkeit, gemessen nach EN ISO 15105-2, reduziert.

17. Landwirtschaftliche Struktur, **dadurch gekennzeichnet, dass** mindestens ein Teil davon mit einer Folie nach einem der Ansprüche 1 bis 14 bedeckt ist.

18. Verfahren zum Abdecken einer landwirtschaftlichen Struktur, umfassend Abdecken von mindestens einem Teil der landwirtschaftlichen Struktur mit einer Folie nach einem der Ansprüche 1 bis 14.

19. Verfahren zur Herstellung einer Folie zum Abdecken landwirtschaftlicher Strukturen, umfassend:
i) Bereitstellen einer Polymerfolie, die eine oder mehrere Schichten umfasst, wobei mindestens eine der Schichten einen oder mehrere UV-Stabilisatoren umfasst; und
ii) Aufbringen einer Beschichtung auf mindestens eine Außenfläche der Polymerfolie, wobei die Beschichtung mindestens eine Schicht umfasst, die ein Polymer umfasst, sodass die Folie eine Sauerstoffdurchlässigkeit von unter 500 ml/m²/bar/Tag bei 23 °C und 0% relativer Luftfeuchtigkeit, gemessen nach EN ISO 15105-2, aufweist,
wobei jede Schicht der Beschichtung durch Aufbringen einer Lösung zum Bilden einer Schicht und Trocknen der Schicht gebildet wird.

20. Verfahren zur Herstellung einer Folie nach Anspruch 19, wobei die Beschichtung durch Tauchen, Sprühen, Flexodruck, Plasma, Laser, Tiefdruck, Reverse-Roll, Roll-to-Roll, Knife-Over-All, Rod-Coater, Jet-Printing oder Slot-Die aufgebracht wird; und/oder
wobei die Außenfläche der Polymerfolie vor dem Aufbringen der Beschichtung mit Corona und/oder Plasma behandelt wird; und/oder
wobei das Verfahren weiter Herstellen der Polymerfolie durch Blas- oder Gussextrusion oder -coextrusion umfasst.

## Revendications

1. Film destiné à recouvrir des structures agricoles, comprenant :
a) un film polymère présentant une ou plusieurs couches, dans lequel au moins une des couches comprend un ou plusieurs stabilisateurs UV ; et
b) un revêtement sur au moins une surface extérieure du film polymère, le revêtement comprenant au moins une couche comprenant un polymère, de telle sorte que le film présente une perméabilité à l'oxygène inférieure à 500 ml/m²/bar/jour à 23°C et 0 % d'humidité relative, telle que mesurée selon la norme EN ISO 15105-2,
dans lequel chaque couche du revêtement est formée en déposant une solution pour former une couche et en séchant la couche.

2. Film selon la revendication 1, dans lequel le film présente une perméabilité à l'oxygène inférieure à 200 ml/m²/bar/jour, de préférence inférieure à 100 ml/m²/bar/jour ; et/ou
dans lequel le film présente une perméabilité à la vapeur d'eau inférieure à 100 g/m²/jour, de préférence inférieure à 50 g/m²/jour, de préférence inférieure à 10 g/m²/jour à 38 °C et 90 % d'humidité relative, telle que mesurée selon la norme ASTM E96 ; et/ou
dans lequel le film polymère présente de 1 à 100 couches, de préférence de 3 à 11 couches ; et/ou
dans lequel le film polymère peut être obtenu par extrusion ou coextrusion, de préférence par extrusion ou coextrusion de film soufflé ou de film coulé ; et/ou
dans lequel le film présente une épaisseur totale de 25 µm à 500 µm et une largeur totale de 1 m à 60 m.

3. Film selon une quelconque revendication précédente, dans lequel la au moins une couche du revêtement comprenant le polymère présente une épaisseur de 0,1 µm à 5 µm, de préférence de 0,1 µm à 2,0 µm, le plus préférentiellement de 0,2 µm à 1,0 µm ; et/ou
dans lequel le revêtement comprend une ou plusieurs particules inorganiques choisies indépendamment dans le groupe consistant en SiO₂, Al₂O₃, TiO₂, AlCl₃, MgO, ZnO, CuO, Fe₂O₃, des argiles et des combinaisons de ceux-ci ; et/ou une ou plusieurs molécules organiques choisies indépendamment dans le groupe consistant en des résines acryliques, des résines époxy, des polyuréthanes, des polyimines, des polysiloxanes, des tensioactifs, des liants et des combinaisons de ceux-ci.

4. Film selon une quelconque revendication précédente, dans lequel le polymère dans le revêtement est un homopolymère ou un copolymère de chlorure de vinylidène ou un homopolymère ou un copolymère d'alcool vinylique.

5. Film selon la revendication 4, dans lequel le copolymère de chlorure de vinylidène comprend au moins 20 % en poids du monomère de chlorure de vinylidène, de préférence au moins 40 % en poids, plus préférentiellement au moins 50 % en poids, plus préférentiellement au moins 60 % en poids, plus préférentiellement au moins 70 % en poids, le plus préférentiellement au moins 80 % en poids, sur la base du poids total du copolymère ; et/ou
dans lequel le copolymère de chlorure de vinylidène comprend moins de 95 % en poids du monomère de chlorure de vinylidène, de préférence moins de 90 % en poids, sur la base du poids total du copolymère.

6. Film selon la revendication 4 ou 5, dans lequel le copolymère d'alcool vinylique est un copolymère d'alcool vinylique et d'acétate de vinyle.

7. Film selon l'une quelconque des revendications 4 à 6, dans lequel la quantité totale de monomères d'alcool vinylique et d'acétate de vinyle dans le copolymère d'alcool vinylique est d'au moins 20 % en poids, de préférence au moins 40 % en poids, plus préférentiellement au moins 50 % en poids, plus préférentiellement au moins 60 % en poids, plus préférentiellement au moins 70 % en poids, le plus préférentiellement au moins 80 % en poids, sur la base du poids total du copolymère ; et/ou
dans lequel la quantité totale de monomères d'alcool vinylique et d'acétate de vinyle dans le copolymère d'alcool vinylique est inférieure à 95 % en poids, de préférence inférieure à 90 % en poids, sur la base du poids total du copolymère ; et/ou
dans lequel le nombre de monomères d'alcool vinylique dans le copolymère d'alcool vinylique est d'au moins 80 % du nombre total de monomères d'alcool vinylique et d'acétate de vinyle, de préférence d'au moins 95 %, le plus préférentiellement d'au moins 97 % ; et/ou
dans lequel un ou plusieurs monomères d'alcool vinylique dans l'homopolymère ou le copolymère d'alcool vinylique ont été modifiés par carboxylation, éthérification, acétalisation, carbamation, amination, sulfatation ou estérification ; et/ou un ou plusieurs monomères d'alcool vinylique sont liés à des chaînes latérales.

8. Film selon l'une quelconque des revendications 4 à 7, dans lequel l'homopolymère ou le copolymère d'alcool vinylique est réticulé, de préférence l'homopolymère ou le copolymère est réticulé par des la chaleur, des UV, et/ou un agent de réticulation ;
de préférence dans lequel l'agent de réticulation est choisi dans le groupe consistant en des alcools, des polyols à chaîne droite, des polyols à chaîne ramifiée, des aldéhydes, des amines, des polyamines, des hydrazides, des polyhydrazides, des sels métalliques, des acides et des acides organiques, de préférence l'agent de réticulation est choisi dans le groupe consistant en l'éthylène glycol, le formaldéhyde, l'acétaldéhyde, le glyoxal, le malondialdéhyde, le succindialdéhyde, le glutaraldéhyde, la métaxylènediamine, le 1,3-bis(aminométhyl)cyclohexane, le dihydrazide adipique, le dodécane dihydrazide, un adduit de polyol carbonyle, le borate de sodium, le carbonate d'ammonium et de zirconium, le glyoxylate de sodium, l'acide malonique, l'acide succinique, l'acide adipique, l'acide borique et l'acide sulfosuccinique.

9. Film selon l'une quelconque des revendications 4 à 8, dans lequel le copolymère de chlorure de vinylidène est un copolymère de chlorure de vinylidène et d'un ou plusieurs monomères de formule (I) et/ou le copolymère d'alcool vinylique est un copolymère d'alcool vinylique, facultativement d'acétate de vinyle, et d'un ou plusieurs monomères de formule (I) : 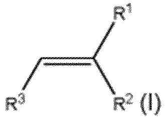
dans lequel chaque R¹ est choisi indépendamment dans le groupe consistant en H, alkyle en C₁-C₁₀, cycloalkyle en C₃-C₁₀, alcoxy en C₁-C₁₀, (alkyle en C₁-C₅)-O-(alkyle en C₁-C₅), aryle en C₆-C₁₀, hétéroaryle en C₁-C₉, nitrile, -OH, halo, -C(O)R⁴, -C(O)OR⁴, -OC(O)R⁴, - C(O)NHR⁴et -NHC(O)R⁴ ;
chaque R² est choisi indépendamment dans le groupe consistant en H, halo, alkyle en C₁-C₃, -C(O)OR⁵et -CH₂C(O)OR⁵ ;
chaque R³ est choisi indépendamment dans le groupe consistant en de H, - C(O)OR⁵et alkyle en C₁-C₃ ;
chaque R⁴ est choisi indépendamment dans le groupe consistant en H, alkyle en C₁-C₁₀, cycloalkyle en C₃-C₁₀, (alkyle en C₁-C₅)-O-(alkyle en C₁-C₅), aryle en C₆-C₁₀ et hétéroaryle en C₁-C₉ ;
chaque R⁵ est choisi indépendamment choisi parmi alkyle en C₁-C₁₀ ;
dans lequel chaque alkyle en C₁-C₁₀, cycloalkyle en C₃-C₁₀, alcoxy en C₁-C₁₀, (alkyle en C₁-C₅)-O-(alkyle en C₁-C₅), aryle en C₆-C₁₀ et hétéroaryle en C₁-C₉ est facultativement substitué indépendamment par un ou plusieurs substituants choisis indépendamment parmi -OH, oxo, -SO₂H, -NO₂et halo.

10. Film selon l'une quelconque des revendications 4 à 9, dans lequel le copolymère de chlorure de vinylidène est un copolymère de chlorure de vinylidène et d'un ou plusieurs monomères supplémentaires, dans lequel les un ou plusieurs monomères supplémentaires sont choisis indépendamment dans le groupe consistant en des alcènes, des acrylates, des halogénures vinyliques, des amides vinyliques, des styrènes, des alcools vinyliques, des esters vinyliques, des éthers vinyliques, des cétones vinyliques, l'acide maléique ou des maléates, l'acide fumarique ou des fumarates, l'acide itaconique ou des itaconates, l'acide crotonique ou des crotonates, de préférence dans lequel les un ou plusieurs monomères supplémentaires sont choisis indépendamment dans le groupe consistant en l'éthène, le propène, le butène, l'acide acrylique, l'acrylate méthylique, l'acrylate d'éthyle, l'acrylate de propyle, l'acrylate de butyle, l'acrylate d'hydroxyéthyle, l'acide méthacrylique, le méthacrylate de méthyle, le méthacrylate d'éthyle, le méthacrylate de propyle, le méthacrylate de butyle, l'acrylonitrile, le méthacrylonitrile, le chlorure de vinyle, le styrène, la méthylvinylcétone, l'alcool vinylique, l'acétate de vinyle et l'acide itaconique ; et/ou
dans lequel le copolymère d'alcool vinylique est un copolymère d'alcool vinylique, facultativement d'acétate de vinyle, et d'un ou plusieurs monomères supplémentaires, dans lequel les un ou plusieurs monomères supplémentaires sont choisis indépendamment dans le groupe consistant en des alcènes, des acrylates, des halogénures vinyliques, des amides vinyliques, des styrènes, des alcools vinyliques, des esters vinyliques, des éthers vinyliques, des cétones vinyliques, l'acide maléique ou des maléates, l'acide fumarique ou des fumarates, l'acide itaconique ou des itaconates, l'acide crotonique ou des crotonates, de préférence dans lequel les un ou plusieurs monomères supplémentaires sont choisis indépendamment dans le groupe consistant en l'éthène, le propène, le butène, l'acide acrylique, l'acrylate méthylique, l'acrylate d'éthyle, l'acrylate de propyle, l'acrylate de butyle, l'acrylate d'hydroxyéthyle, l'acide méthacrylique, le méthacrylate de méthyle, le méthacrylate d'éthyle, le méthacrylate de propyle, le méthacrylate de butyle, l'acrylonitrile, le méthacrylonitrile, le chlorure de vinyle, le chlorure de vinylidène, le styrène, la méthylvinylcétone et l'acide itaconique.

11. Film selon une quelconque revendication précédente, dans lequel le revêtement comprend un homopolymère ou un copolymère de chlorure de vinylidène.

12. Film selon une quelconque revendication précédente, dans lequel le revêtement comprend plus d'une couche, dans lequel au moins une couche comprend le polymère ; ou
dans lequel le revêtement comprend une seule couche comprenant le polymère.

13. Film selon une quelconque revendication précédente, comprenant un revêtement sur les deux surfaces extérieures du film polymère, dans lequel chaque revêtement est indépendamment tel que défini dans l'une quelconque des revendications 1 à 12.

14. Film selon une quelconque revendication précédente, dans lequel les une ou plusieurs couches du film polymère comprennent chacune indépendamment un ou plusieurs polymères choisis indépendamment dans le groupe consistant en le polyéthylène basse densité (LDPE), le polyéthylène linéaire basse densité (LLDPE), le polyéthylène linéaire basse densité métallocène (MLLDPE), le copolymère d'éthylène-acétate de vinyle (EVA), le copolymère d'éthylène-acrylate de butyle (EBA), le polyéthylène haute densité (HDPE), le polypropylène (PP), le polyuréthane thermoplastique (TPU), le polyéthylène téréphtalate (PET), le polychlorure de vinyle (PVC), le polyamide (PA), le copolymère d'éthylène-alcool vinylique (EVOH), et des combinaisons de ceux-ci ; et/ou
dans lequel au moins une des couches du film polymère comprend en outre des absorbeurs IR, des agents antibuée, des agents anti-goutte, des matériaux anti-poussière, des matériaux anti-algues, des matériaux d'aide à l'adhérence, et/ou des pigments ; et/ou
dans lequel les un ou plusieurs stabilisateurs UV sont choisis indépendamment dans le groupe consistant en des stabilisateurs de lumière à base d'amine encombrée (HALS), des absorbeurs UV et des complexes organiques de nickel ; et/ou
dans lequel les un ou plusieurs stabilisateurs UV sont présents en une quantité de 0,1 % en poids à 20 % en poids, de préférence de 0,1 % en poids à 10 % en poids, le plus préférentiellement de 0,1 % en poids à 5 % en poids, sur la base du poids total de la couche.

15. Utilisation d'un revêtement sur au moins une surface extérieure d'un film polymère, le revêtement comprenant au moins une couche comprenant un polymère, dans laquelle chaque couche du revêtement est formée en déposant une solution pour former une couche et en séchant la couche, et dans laquelle le film polymère comprenant une ou plusieurs couches, au moins une couche comprenant un ou plusieurs stabilisateurs UV, pour réduire la sensibilité du film polymère à une photodégradation en présence de produits agrochimiques ; et/ou pour réduire la perméabilité du film polymère au gaz et/ou à la vapeur d'eau.

16. Utilisation selon la revendication 15, dans laquelle le revêtement réduit la perméabilité à l'oxygène du film polymère à moins de 500 ml/m²/bar/jour à 23°C et 0 % d'humidité relative, telle que mesurée selon la norme EN ISO 15105-2.

17. Structure agricole, **caractérisée en ce qu'**au moins une partie de celle-ci est recouverte d'un film selon l'une quelconque des revendications 1 à 14.

18. Procédé de recouvrement d'une structure agricole, comprenant le recouvrement d'au moins une partie de la structure agricole avec un film selon l'une quelconque des revendications 1 à 14.

19. Procédé de production d'un film destiné à recouvrir des structures agricoles, comprenant les étapes consistant à :
i) fournir un film polymère comprenant une ou plusieurs couches, dans lequel au moins une des couches comprend un ou plusieurs stabilisateurs UV ; et
ii) déposer un revêtement sur au moins une surface extérieure du film polymère, le revêtement comprenant au moins une couche comprenant un polymère, de telle sorte que le film présente une perméabilité à l'oxygène inférieure à 500 ml/m²/bar/jour à 23°C et 0 % d'humidité relative, telle que mesurée selon la norme EN ISO 15105-2,
dans lequel chaque couche du revêtement est formée en déposant une solution pour former une couche et en séchant la couche.

20. Procédé de production d'un film selon la revendication 19, dans lequel le revêtement est déposé par immersion, pulvérisation, flexographie, plasma, laser, impression par héliogravure, rouleau inversé, rouleau à rouleau, couteau sur l'ensemble, coucheuse à tige, impression par jet ou matrice à fente ; et/ou
dans lequel la surface extérieure du film polymère est traitée par effet corona et/ou plasma avant le dépôt du revêtement ; et/ou
dans lequel le procédé comprend en outre la production du film polymère par extrusion ou par coextrusion soufflée ou coulée.
